(19) Europäisches Patentamt
European Patent Office
Office européen des brevets

(11) EP 1 586 591 A1

(12) EUROPEAN PATENT APPLICATION
published in accordance with Art. 158(3) EPC

(43) Date of publication:
19.10.2005 Bulletin 2005/42

(21) Application number: 04704723.8

(22) Date of filing: 23.01.2004

(51) Int Cl.[7]: C08F 210/18, C08F 4/64

(86) International application number:
PCT/JP2004/000586

(87) International publication number:
WO 2004/065435 (05.08.2004 Gazette 2004/32)

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 23.01.2003 JP 2003014524

(71) Applicant: Mitsui Chemicals, Inc.
Tokyo 105-7117 (JP)

(72) Inventors:
- MATSUURA, Sadahiko
Sodegaura-shi, Chiba 299-0265 (JP)
- MURAKAMI, Hidetatsu
Sodegaura-shi, Chiba 299-0265 (JP)
- HASADA, Yasuhiro
Sodegaura-shi, Chiba 299-0265 (JP)
- SAITO, Junji
Sodegaura-shi, Chiba 299-0265 (JP)
- FUJITA, Terunori
Sodegaura-shi, Chiba 299-0265 (JP)
- MATSUI, Shigekazu
Sodegaura-shi, Chiba 299-0265 (JP)

(74) Representative: HOFFMANN EITLE
Arabellastrasse 4
81925 München (DE)

(54) **PROCESS FOR PRODUCING ETHYLENE/a-OLEFIN/UNCONJUGATED POLYENE COPOLYMER AND ETHYLENE/a-OLEFIN/UNCONJUGATED POLYENE COPOLYME R**

(57) The invention has an object of providing a process for producing an ethylene/α-olefin/non-conjugated polyene copolymer with good polymerization activity and high conversion of non-conjugated polyene.

The invention achieves the object by providing a process for producing an ethylene/α-olefin/non-conjugated polyene copolymer that comprises copolymerizing ethylene, an α-olefin and a non-conjugated polyene in a hydrocarbon solvent with use of a transition metal compound catalyst, and removing the unreacted monomers and the hydrocarbon solvent from the copolymer solution without removing the catalyst residue, wherein the copolymerization is carried out at a polymerization temperature of 100°C or above and a polymerization pressure of 2.7 MPa or above in a manner such that the non-conjugated polyene concentration in the polymerization solution is less than the maximum non-conjugated polyene concentration Cmax (mol/L) indicated below:

Cmax = 0.050 (mol/L) when the copolymer has an iodine value (IV) of 9.0 g/100 g to less than 17.0 g/100 g; or
Cmax = 0.104 (mol/L) when the copolymer has an iodine value (IV) of 17.0 g/100 g or above.

EP 1 586 591 A1

## Description

### FIELD OF THE INVENTION

The present invention relates to a novel process for producing an ethylene/α-olefin/non-conjugated polyene copolymer, and to a novel ethylene/α-olefin/non-conjugated polyene copolymer.

### BACKGROUND OF THE INVENTION

Ethylene/α-olefin/non-conjugated polyene copolymers are rubber materials known as EPDM. They are widely employed as modifiers for various resins, electric wire coating materials, waterproof sheet materials, belts, hoses, and automobile part materials. Low molecular weight liquid EPDM are useful as sealants and fuel cell separator films. Where necessary, EPDM are vulcanized with sulfur, peroxides or the like to improve their rubber properties.

Production of these copolymers is generally carried out using a vanadium catalyst. Because the vanadium catalyst has low catalytic activity, the product has to be decatalyzed or deashed, causing cost disadvantages. JP-A-H05-262827 and JP-A-H09-151205 disclose processes for producing an ethylene/α-olefin/non-conjugated diene copolymer rubber in the presence of a catalyst that comprises a transition metal-containing metallocene compound and an aluminoxane. Although these processes provide high catalytic activity, the conversion of the non-conjugated diene to polymer is low. Therefore, the non-conjugated diene must be fed in larger quantities so that cost disadvantages are encountered.

Meanwhile, the ethylene/α-olefin/non-conjugated polyene copolymers sometimes require low-temperature properties, for example flexibility. Therefore, improvement of low-temperature flexibility thereof is desirable. Accordingly, there has been desired development of a production process whereby EPDM rubbers of improved properties may be produced more efficiently and inexpensively.

### PROBLEMS TO BE SOLVED BY THE INVENTION

Development of a catalyst system capable of higher catalytic activity leads to a reduced production time and more efficient and cost advantageous production. Furthermore, such catalyst can perform satisfactorily in smaller amounts so that decatalyzation or deashing of the resultant product may be eliminated. Accordingly, great advantages may be achieved in product cost and quality.

Moreover, development of a catalyst system enabling higher conversion of non-conjugated polyene leads to reduced feeding amount of the non-conjugated polyene and thus allows more efficient and cost advantageous production. Decatalyzation or deashing generally produces large quantities of waste liquids. Accordingly, elimination thereof results in reduced environmental load and contributes to sustainable development.

It is also industrially desirable to provide an ethylene/α-olefin/non-conjugated polyene copolymer improved in low temperature flexibility.

The present inventors carried out earnest studies of a novel process for producing a copolymer rubber having the desired properties. As a result, they have developed a process whereby ethylene, an α-olefin and a non-conjugated polyene may be polymerized with high activity, high conversion of the non-conjugated polyene may be achieved, and an EPDM copolymer rubber having the desired properties may be produced. The present invention has been completed based on this finding. The inventors have further developed an ethylene/α-olefin copolymer having improved low temperature flexibility. The present invention has been completed based on this finding.

### DISCLOSURE OF THE INVENTION

A first process for producing an ethylene/α-olefin/non-conjugated polyene copolymer according to the present invention comprises copolymerizing ethylene, an α-olefin and a non-conjugated polyene in a hydrocarbon solvent with use of a transition metal compound catalyst, and removing the unreacted monomers and the hydrocarbon solvent from the copolymer solution without removing the catalyst residue, wherein the copolymerization is carried out at a polymerization temperature of 100°C or above and a polymerization pressure of 2.7 MPa or above in a manner such that the non-conjugated polyene concentration in the polymerization solution is less than the maximum non-conjugated polyene concentration Cmax (mol/L) indicated below:

Cmax = 0.050 (mol/L) when the copolymer has an iodine value (IV) of 9.0 g/100 g to less than 17.0 g/100 g; or
Cmax = 0.104 (mol/L) when the copolymer has an iodine value (IV) of 17.0 g/100 g or above.

A second process for producing an ethylene/α-olefin/non-conjugated polyene copolymer according to the

present invention comprises copolymerizing ethylene, an α-olefin and a non-conjugated polyene in a hydrocarbon solvent with use of a transition metal compound catalyst, and removing the unreacted monomers and the hydrocarbon solvent from the copolymer solution without removing the catalyst residue, wherein the copolymerization is carried out at a polymerization temperature of 100°C or above and a combined vapor pressure of the hydrocarbon solvent and the unreacted monomers of 2.7 MPa or above in a manner such that the non-conjugated polyene concentration in the polymerization solution is less than the maximum non-conjugated polyene concentration Cmax (mol/L) indicated below:

Cmax = 0.050 (mol/L) when the copolymer has an iodine value (IV) of 9.0 g/100 g to less than 17.0 g/100 g; or
Cmax = 0.104 (mol/L) when the copolymer has an iodine value (IV) of 17.0 g/100 g or above.

A third process for producing an ethylene/α-olefin/non-conjugated polyene copolymer according to the present invention comprises copolymerizing ethylene, an α-olefin and a non-conjugated polyene in a hydrocarbon solvent with use of a transition metal compound catalyst, and removing the unreacted monomers and the hydrocarbon solvent from the copolymer solution without removing the catalyst residue, wherein the copolymerization is carried out at a polymerization temperature T (K) and a polymerization pressure $P_a$ (MPa) in a manner such that the non-conjugated polyene concentration in the polymerization solution is less than the maximum non-conjugated polyene concentration Cmax (mol/L) indicated below:

$$\mathrm{Cmax} = 0.050 \times \text{Iodine Value (IV)} \times 10^{\{12.25+1.16\times \log P^{a}+5.37\times \log(1/T)\}}$$

when the polymerization temperature is less than 353.16 K (80°C);

$$\mathrm{Cmax} = 0.050 \times \text{Iodine Value (IV)} \times 10^{\{11.88+1.23\times \log P^{a}+5.23\times \log(1/T)\}}$$

when the polymerization temperature is from 353.16 K (80°C) to less than 393.16 K (120°C) ; or

$$\mathrm{Cmax} = 0.050 \times \text{Iodine Value (IV)} \times 10^{\{19.02+1.61\times \log P^{a}+8.02\times \log(1/T)\}}$$

when the polymerization temperature is 393.16 K (120°C) or above.

A fourth process for producing an ethylene/α-olefin/non-conjugated polyene copolymer according to the present invention comprises copolymerizing ethylene, an α-olefin and a non-conjugated polyene in a hydrocarbon solvent with use of a transition metal compound catalyst, and removing the unreacted monomers and the hydrocarbon solvent from the copolymer solution without removing the catalyst residue, wherein the copolymerization is carried out at a polymerization temperature T (K) and a combined vapor pressure $P_b$ (MPa) of the hydrocarbon solvent and the monomers in a manner such that the non-conjugated polyene concentration in the polymerization solution is less than the maximum non-conjugated polyene concentration Cmax (mol/L) indicated below:

$$\mathrm{Cmax} = 0.050 \times \text{Iodine Value (IV)} \times 10^{\{12.25+1.16\times \log P^{b}+5.37\times \log(1/T)\}}$$

when the polymerization temperature is less than 353.16 K (80°C);

$$\mathrm{Cmax} = 0.050 \times \text{Iodine Value (IV)} \times 10^{\{11.88+1.23\times \log P^{b}+5.23\times \log(1/T)\}}$$

when the polymerization temperature is from 353.16 K (80°C) to less than 393.16 K (120°C); or

$$Cmax = 0.050 \times \text{Iodine Value (IV)} \times 10^{\{19.02+1.61\times \log P^{b}+8.02\times \log(1/T)\}}$$

when the polymerization temperature is 393.16 K (120°C) or above.

A fifth process for producing an ethylene/α-olefin/non-conjugated polyene copolymer according to the present invention comprises copolymerizing ethylene, an α-olefin and a non-conjugated polyene in a hydrocarbon solvent, and obtaining a copolymer without removing the catalyst residue from the polymerization solution, wherein the copolymerization is carried out under conditions satisfying the formula (1) :

$$\frac{\text{Ethylene concentration in polymerization solution (wt\%)} \times \text{Non-conjugated polyene concentration in polymer (wt\%)}}{\text{Non-conjugated polyene concentration in polymerization solution (wt\%)}} \geq 20$$

(1)

In the fifth process, it is preferred that the unreacted monomers and the hydrocarbon solvent are removed from the polymer solution whilst the catalyst residue is not removed. Also, it is particularly preferred that the removal of the unreacted monomers and the hydrocarbon solvent is performed by evaporation.

The content of residual unreacted polyene in the ethylene/α-olefin/non-conjugated polyene copolymer obtained by any of the first to fifth processes is preferably not more than 500 ppm.

The transition metal compound catalyst employed in the first to fifth processes is preferably capable of catalyzing copolymerization of ethylene, propylene and a non-conjugated polyene to give an ethylene/propylene/non-conjugated polyene copolymer having an ethylene content of 70 mol% and an iodine value of at least 15, when the copolymerization is carried out under conditions such that the polymerization temperature is 80°C, a reactor is employed which includes a gas phase and a liquid phase, the ethylene and propylene of the gas phase have a combined partial pressure of 0.6 MPa or above, and the non-conjugated polyene of the liquid phase has a concentration of 15 mmol/L or below.

The transition metal content in the copolymer obtained by any of the first to fifth processes is preferably not more than 20 ppm.

The transition metal compound catalyst is preferably a transition metal-containing polymerization catalyst comprising:

(A) a transition metal compound represented by the following formula (I); and
(B) at least one compound selected from (B-1) to (B-3) :

(B-1) an organometallic compound;
(B-2) an organoaluminum oxy-compound; and
(B-3) a compound which reacts with the transition metal compound (A) to form an ion pair:

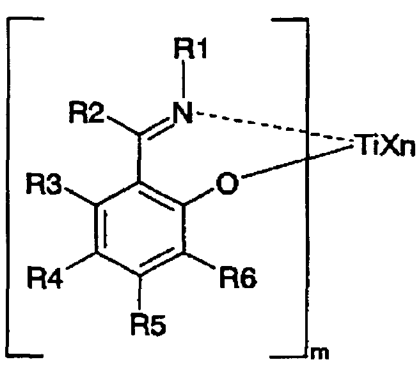

... (I)

wherein:

m is an integer of 1 to 4;

R1 to R5, which may be the same or different, are each a hydrogen atom, a halogen atom, a hydrocarbon group, a heterocyclic compound residue, an oxygen-containing group, a nitrogen-containing group, a boron-containing group, a sulfur-containing group, a phosphorus-containing group, a silicon-containing group, a germanium-containing group or a tin-containing group; R6 is a group selected from aliphatic hydrocarbon groups in which the carbon bonded to the phenyl group is a primary, secondary or tertiary carbon, alicyclic hydrocarbon groups in which the carbon bonded to the phenyl group is a primary, secondary or tertiary carbon, and aromatic groups; and two or more of these substituent groups may be bonded to each other to form a ring;

when m is 2 or greater, two of the groups R1 to R6 may be bonded to each other (with the proviso that the groups R1 are not bonded to each other);

n is a number satisfying a valence of the titanium atom; and

X is a hydrogen atom, a halogen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group or a tin-containing group, and when n is 2 or greater, plural groups X may be the same or different and may be bonded to each other to form a ring.

An ethylene/α-olefin/non-conjugated polyene copolymer according to the present invention comprises ethylene, an α-olefin of 3 to 20 carbon atoms and a non-conjugated polyene and is characterized in that:

(i) the Mooney viscosity at 100°C (ML (1+4) 100°C) is 5 to 190 or the intrinsic viscosity [η] at 135°C in decalin is 0.02 to 10 dl/g;

(ii) the copolymer contains ethylene in an amount of 50 to 98.9 mol%, the α-olefin of 3 to 20 carbon atoms in an amount of 1 to 49.9 mol%, and the non-conjugated polyene in an amount of 0.1 to 49 mol% based on 100 mol% of the combined ethylene, α-olefin and non-conjugated polyene; and

(iii) the value B indicated below satisfies the formula (2) :

$$B \geq (1/a-1) \times 0.26+1 \qquad (2)$$

wherein $B=(c+d) / (2\times a\times (e+f))$, in which a is an ethylene molar fraction, c is an ethylene/α-olefin dyad molar fraction, d is an ethylene/non-conjugated polyene dyad molar fraction, e is an α-olefin molar fraction, and f is a non-conjugated polyene molar fraction.

In the ethylene/α-olefin/non-conjugated polyene copolymer obtained by the present invention, the non-conjugated polyene preferably has a norbornene skeleton.

The ethylene/α-olefin/non-conjugated polyene copolymer preferably provides a $^{13}$C-NMR spectrum in which the intensity ratio $T\alpha\beta/T\alpha\alpha$ is 0.015 to 0.15.

The transition metal content in the copolymer is preferably 20 ppm or less.

## PREFERRED EMBODIMENTS OF THE INVENTION

Hereinbelow, the processes for producing an ethylene/α-olefin/non-conjugated polyene copolymer of the present invention will be described in detail.

### α-Olefins

The α-olefins employable in the present invention are not limited, but those of 3 to 20 carbon atoms are suitable. Specific examples include propylene, 1-butene, 3-methyl-1-butene, 4-methyl-1-pentene, 3-ethyl-1-pentene, 1-hexene, 4-methyl-1-hexene, 4,4-dimethyl-1-pentene, 4-ethyl-1-hexene, 3-ethyl-1-hexene, 1-octene, 1-decene, 1-dodecene, 1-tetradodecene, 1-hexadecene, 1-octadecene and 1-eicosene. Of these, the α-olefins of 3 to 8 carbon atoms are preferred, and propylene, 1-butene, 1-hexene and 1-octene are particularly preferred.

These α-olefins may be used singly or in combination of plural kinds, and may be selected appropriately so as to optimize the properties of the copolymer rubber produced. For example, selection may be made so that vulcanization of the copolymer or a mixture containing the copolymer will result in desired properties.

### Non-conjugated polyenes

The present invention can employ various kinds of non-conjugated polyenes. For example, cyclic or linear polyene compounds are suitably used.

Specific examples of the cyclic non-conjugated polyenes include dicyclopentadiene, 2-methyl-2,5-norbornadiene, 5-ethylidene-2-norbornene, 5-isopropylidene-2-norbornene, 5-isopropenyl-2-norbornene, 5-methylene-2-norbornene and 5-vinyl-2-norbornene.
Specific examples of the linear non-conjugated polyenes include 1,4-hexadiene, 1,5-hexadiene, 1,6-octadiene and 6-methyl-1,5-heptadiene.
Of these, the cyclic non-conjugated dienes, particularly those having a norbornyl skeleton are preferred, and 5-ethylidene-2-norbornene is even more preferable.

Ethylene/propylene/non-conjugated polyene copolymer

The ethylene/propylene/non-conjugated polyene copolymer (hereinafter also referred to as "ethylene copolymer rubber") produced by the invention desirably contains (i) a structural unit derived from ethylene (ethylene unit) and (ii) a structural unit derived from the $C_{3-20}$ $\alpha$-olefin ($\alpha$-olefin unit) in a molar ratio ((i)/(ii)) of 99/1 to 1/99, preferably 85/15 to 50/50, and more preferably 82/18 to 55/45.
The ethylene compound desirably contains a structural unit derived from the non-conjugated polyene compound in an amount of 0.1 to 50 mol%, preferably 0.2 to 8 mol%, and more preferably 0.3 to 5 mol% based on all the structural units.
The ethylene copolymer rubber desirably ranges in intrinsic viscosity [$\eta$] as measured in decalin at 135°C from 0.02 to 10 dl/g, preferably from 0.02 to 5 dl/g, and more preferably from 0.02 to 4 dl/g.
In the invention, the iodine value is desirably in the range of 0.5 to 50, preferably 1 to 40, and particularly preferably 3 to 35.
The first process for producing an ethylene/$\alpha$-olefin/non-conjugated polyene copolymer according to the present invention comprises copolymerizing ethylene, the $\alpha$-olefin and the non-conjugated polyene in a hydrocarbon solvent with use of a transition metal compound catalyst, and removing the unreacted monomers and the hydrocarbon solvent from the copolymer solution without removing the catalyst residue, wherein the copolymerization is carried out at a polymerization temperature of 100°C or above and a polymerization pressure of 2.7 MPa or above in a manner such that the unreacted non-conjugated polyene concentration in the polymerization solution is less than the maximum non-conjugated polyene concentration Cmax (mol/L) indicated below:

(1-1) Cmax = 0.050 (mol/L) when the copolymer has an iodine value (IV) of 9.0 g/100 g to less than 17.0 g/100 g; or
(1-2) Cmax = 0.104 (mol/L) when the copolymer has an iodine value (IV) of 17.0 g/100 g or above.

The hydrocarbon solvent used in the present invention is a hydrocarbon compound. Specific examples thereof include:

aliphatic hydrocarbons such as propane, butane, pentane, hexane, heptane, octane, decane, dodecane and kerosene;
alicyclic hydrocarbons such as cyclopentane, cyclohexane and methylcyclopentane; and
aromatic hydrocarbons such as benzene, toluene and xylene.

The hydrocarbon solvent may be a halogenated hydrocarbon compound. Exemplary halogenated hydrocarbon compounds include ethylene chloride, chlorobenzene and dichloromethane.
These compounds may be used singly or in combination of two or more kinds.
From the viewpoint of removal of solvent described later, the hydrocarbon solvents of 4 to 12 carbon atoms are preferred. It is also preferable that the hydrocarbon solvent consists solely of carbon and hydrogen atoms.
The polymerization pressure is generally in the range of 0.1 to 10 MPa, and preferably 0.4 to 5 MPa. More specifically, an appropriate pressure varies depending on the temperature. For example, a pressure from 2.7 to 5 MPa is preferable when the temperature is 100°C or above. The polymerization pressure in the above range provides sufficient catalytic activity and is also advantageous in terms of equipment costs and electric power costs for equipment operation.
The polymerization may be carried out batchwise, semi-continuously or continuously. The polymerization reactor may be, although not particularly limited to, a tank reactor or a pipe reactor.
As used herein, the polymerization pressure represents a pressure in the polymerizer and is measured with a pressure gauge attached to the polymerizer. When the polymerizer has a gas phase, the polymerization pressure may be measured with respect to either of the gas and the liquid phases. In the case of the pipe reactor, the polymerization pressure is an average pressure. The tank reactor has no limitation as to the measuring point. In batchwise polymerization where the pressure varies, an average pressure is obtained by averaging the pressures at initiation and completion of the polymerization.

Exemplary pressure gauzes include Bourdon tube pressure gauge.

The polymerization temperature is a temperature of the polymerization solution. The tank reactor has no limitation as to the measuring point provided that the temperature is uniform throughout the polymerization solution. In the case of the pipe reactor, the polymerization temperature is determined by measuring the temperature at the same points where the pressure has been measured, and averaging the temperatures obtained.

The iodine value of the copolymer may be measured by the conventional method.

In the present invention, copolymerization is performed under conditions such that the unreacted non-conjugated polyene in the polymerization solution has a concentration C (mol/L) which is less than the above-specified Cmax. This concentration leads to easy removal of the unreacted monomers, and is also preferable in that the copolymer obtained has a small content of residual unreacted non-conjugated polyene even if the unreacted monomers have been removed by a simple method and further the copolymer has less odor.

When the iodine value (IV) of the copolymer is from 9.0 g/100 g to less than 17.0 g/100 g, Cmax (mol/L) is 0.050 (mol/L), preferably 0.040 (mol/L), and more preferably 0.030 (mol/L).

When the iodine value (IV) of the copolymer is 17.0 g/100 g or above, Cmax (mol/L) is 0.104 (mol/L), preferably 0.083 (mol/L), and more preferably 0.063 (mol/L).

The concentration of unreacted non-conjugated polyene in the polymerization solution may be controlled by regulating the feeding amount of the non-conjugated polyene. The unreacted non-conjugated polyene concentration in the polymerization solution is obtained from material balance. In the case of batchwise polymerization, the concentration is measured at initiation and completion of the polymerization by material balance and/or vapor-liquid equilibrium calculation (herein, SRK), and thereafter the results are averaged.

In the present invention, the unreacted monomers and the hydrocarbon solvent are removed from the copolymer solution whilst the catalyst residue is not removed.

Removal of the catalyst residue is a process generally called deashing, in which a polymer solution is brought into contact with water, alcohol or ketone to transfer the catalyst residue thereto, and thereafter the water, alcohol or ketone is removed together with the catalyst residue. In the present invention, the unreacted monomers and the hydrocarbon solvent are removed without performing such removal of the catalyst residue.

There is no limitation as to the method for removing the unreacted monomers and the hydrocarbon solvent. However, evaporation is a preferable removing method. An exemplary removing method by evaporation is described on P. 372 of New Polymer Production Process (published from KOGYO CHOSAKAI PUBLISHING CO., LTD. in 1994). According to the described method, the unreacted monomers and hydrocarbon solvent are removed by a series of steps in which the copolymer solution is heated to 150 to 250°C and flashed off in a drum to give a solution having 90% or more concentration, and the solution is dried with use of a degassing extruder.

The ethylene/α-olefin/non-conjugated polyene copolymer produced as described above has small contents of the residual unreacted non-conjugated polyene and the transition metal.

The second process for producing an ethylene/α-olefin/non-conjugated polyene copolymer according to the present invention comprises copolymerizing ethylene, the α-olefin and the non-conjugated polyene in the hydrocarbon solvent with use of a transition metal compound catalyst, and removing the unreacted monomers and the hydrocarbon solvent from the copolymer solution without removing the catalyst residue, wherein the copolymerization is carried out at a polymerization temperature of 100°C or above and a combined vapor pressure of the hydrocarbon solvent and the unreacted monomers of 2.7 MPa or above in a manner such that the unreacted non-conjugated polyene concentration in the polymerization solution is less than the maximum non-conjugated polyene concentration Cmax (mol/L) indicated below:

(2-1) Cmax = 0.050 (mol/L) when the copolymer has an iodine value (IV) of 9.0 g/100 g to less than 17.0 g/100 g; or
(2-2) Cmax = 0.104 (mol/L) when the copolymer has an iodine value (IV) of 17.0 g/100 g or above.

When the polymerizer has a gas phase, the combined vapor pressure ($P_b$) of the hydrocarbon solvent and the monomers is obtained by multiplying the molar fractions of the hydrocarbon solvent and monomers of the gas phase by the polymerization pressure. On the other hand, when the polymerizer does not have a gas phase, the combined vapor pressure is determined from vapor-liquid equilibrium calculation with respect to the composition of the contents other than the polymer. The vapor-liquid equilibrium calculation has many varieties, but SRK (Soave-Redlich-Kwong) is used herein.

In the present invention, copolymerization is performed in the presence of a transition metal catalyst at temperatures generally ranging from -50 to 200°C, preferably from 0 to 170°C, and more preferably from 40 to 150°C. The combined vapor pressure ($P_b$) of the hydrocarbon solvent and the monomers is generally in the range of 0.1 to 10 MPa, and preferably 0.4 to 5 MPa. More specifically, an appropriate combined vapor pressure ($P_b$) of the hydrocarbon solvent and the monomers varies depending on the temperature. For example, a combined vapor pressure from 2.7 to 5 MPa is preferable when the temperature is 100°C or above. The combined vapor pressure in the above range

provides sufficient catalytic activity and is also advantageous in terms of equipment costs and electric power costs for equipment operation.

When the iodine value (IV) of the copolymer is from 9.0 g/100 g to less than 17.0 g/100 g, Cmax (mol/L) is 0.050 (mol/L), preferably 0.040 (mol/L), and more preferably 0.030 (mol/L).

When the iodine value (IV) of the copolymer is 17.0 g/100 g or above, Cmax (mol/L) is 0.104 (mol/L), preferably 0.083 (mol/L), and more preferably 0.063 (mol/L).

The ethylene/α-olefin/non-conjugated polyene copolymer produced as described above has small contents of the residual unreacted non-conjugated polyene and the transition metal.

The third process for producing an ethylene/α-olefin/non-conjugated polyene copolymer according to the present invention comprises copolymerizing ethylene, the α-olefin and the non-conjugated polyene in the hydrocarbon solvent with use of a transition metal compound catalyst, and removing the unreacted monomers and the hydrocarbon solvent from the copolymer solution without removing the catalyst residue, wherein the copolymerization is carried out at a polymerization temperature T (K) and a polymerization pressure $P_a$ (MPa) in a manner such that the unreacted non-conjugated polyene concentration C (mol/L) in the polymerization solution is less than the maximum non-conjugated polyene concentration Cmax (mol/L) indicated below:

(3-1)

$$\mathrm{Cmax} = 0.050 \times \text{Iodine Value (IV)} \times 10^{\{12.25+1.16\times \log P^{a}+5.37\times \log(1/T)\}}$$

when the polymerization temperature is less than 353.16 K (80°C);

(3-2)

$$\mathrm{Cmax} = 0.050 \times \text{Iodine Value (IV)} \times 10^{\{11.88+1.23\times \log P^{a}+5.23\times \log(1/T)\}}$$

when the polymerization temperature is from 353.16 K (80°C) to less than 393.16 K (120°C); or

(3-3)

$$\mathrm{Cmax} = 0.050 \times \text{Iodine Value (IV)} \times 10^{\{19.02+1.61\times \log P^{a}+8.02\times \log(1/T)\}}$$

when the polymerization temperature is 393.16 K (120°C) or above.

In the above formulae:

C: Unreacted non-conjugated polyene concentration in polymerization solution (mol/L);
Cmax: Maximum polyene concentration defined by the above formula;
(IV): Polymer's iodine value (g/100 g);
$P_a$: Polymerization pressure (MPa); and
T: Polymerization temperature (K).

In the present invention, copolymerization is performed in the presence of a transition metal catalyst at temperatures generally ranging from -50 to 200°C, preferably from 0 to 170°C, and more preferably from 40 to 150°C. The polymerization pressure is generally in the range of 0.1 to 10 MPa, and preferably 0.4 to 5 MPa. More specifically, an appropriate pressure varies depending on the temperature. For example, a pressure from 2. 7 to 5 MPa is preferable when the temperature is 100°C or above.

The polymerization pressure in the above range provides sufficient catalytic activity and is also advantageous in terms of equipment costs and electric power costs for equipment operation.

The polymerization method and reactor are the same as in the first process. The polymerization pressure and temperature are as described in the first process, and may be measured by the same methods described above. The

iodine value of the copolymer may be determined by the conventional method.

The third process carries out copolymerization under conditions such that the unreacted non-conjugated polyene in the polymerization solution has a concentration C (mol/L) which is less than the above-specified Cmax. This concentration leads to easy removal of the unreacted monomers, and is also preferable in that the copolymer obtained has a small content of residual unreacted non-conjugated polyene to cause less odor. The unreacted non-conjugated polyene concentration in the polymerization solution may be controlled by the same method as described in the first process.

When the polymerization temperature is less than 353.16 K (80°C), the formula Cmax = $A_1 \times$ Iodine Value (IV) $\times 10^{\{12.25+1.16\times \log Pa+5.37\times \log(1/T)\}}$ requires $A_1$ = 0.050, preferably $A_1$ = 0.040, and more preferably $A_1$ = 0.030.

When the polymerization temperature is from 353.16 K (80°C) to less than 393.16 K (120°C), the formula Cmax = $A_2 \times$ Iodine Value (IV) $\times 10^{\{11.88+1.23\times \log Pa+5.23\times \log(1/T)\}}$ requires $A_2$ = 0.050, preferably $A_2$ = 0.040, and more preferably $A_2$ = 0.030.

When the polymerization temperature is 393.16 K (120°C) or above, the formula Cmax = $A_3 \times$ Iodine Value (IV) $\times 10^{\{19.02+1.61\times \log Pa+8.02\times \log(1/T)\}}$ requires $A_3$ = 0.050, preferably $A_3$ = 0.040, and more preferably $A_3$ = 0.030.

In one embodiment of the present process, copolymerization may be carried out to obtain a copolymer having a desired iodine value (IV) by controlling the reaction conditions T, C and $P_a$ so as to satisfy the above formula.

In the present process, an ethylene/α-olefin/non-conjugated polyene copolymer is produced in the same manner as in the first process, by removing the unreacted monomers and the hydrocarbon solvent from the copolymer solution without performing removal of the catalyst residue.

The ethylene/α-olefin/non-conjugated polyene copolymer thus produced has small contents of the residual unreacted non-conjugated polyene and the transition metal.

The fourth process for producing an ethylene/α-olefin/non-conjugated polyene copolymer according to the present invention comprises copolymerizing ethylene, the α-olefin and the non-conjugated polyene in the hydrocarbon solvent with use of a transition metal compound catalyst, and removing the unreacted monomers and the hydrocarbon solvent from the copolymer solution without removing the catalyst residue, wherein the copolymerization is carried out at a polymerization temperature T (K) and a combined vapor pressure $P_b$ (MPa) of the hydrocarbon solvent and the monomers in a manner such that the unreacted non-conjugated polyene concentration C (mol/L) in the polymerization solution is less than the maximum non-conjugated polyene concentration Cmax (mol/L) indicated below:

(4-1)

$$\text{Cmax} = 0.050 \times \text{Iodine Value (IV)} \times 10^{\{12.25+1.16\times \log P^b+5.37\times \log(1/T)\}}$$

when the polymerization temperature is less than 353.16 K (80°C);

(4-2)

$$\text{Cmax} = 0.050 \times \text{Iodine Value (IV)} \times 10^{\{11.88+1.23\times \log P^b+5.23\times \log(1/T)\}}$$

when the polymerization temperature is from 353.16 K (80°C) to less than 393.16 K (120°C) ; or

(4-3)

$$\text{Cmax} = 0.050 \times \text{Iodine Value (IV)} \times 10^{\{19.02+1.61\times \log P^b+8.02\times \log(1/T)\}}$$

when the polymerization temperature is 393.16 K (120°C) or above.

In the above formulae:

C: Unreacted non-conjugated polyene concentration in polymerization solution (mol/L);
Cmax: Maximum polyene concentration defined by the above formula;

(IV): Iodine value of polymer (g/100 g);
$P_b$: Combined vapor pressure of hydrocarbon solvent and monomers (MPa); and
T: Polymerization temperature (K).

When the polymerizer has a gas phase, the combined vapor pressure ($P_b$) of the hydrocarbon solvent and the monomers is obtained by multiplying the molar fractions of the hydrocarbon solvent and monomers of the gas phase by the polymerization pressure.

On the other hand, when the polymerizer does not have a gas phase, the combined vapor pressure is determined from vapor-liquid equilibrium calculation with respect to the composition of the contents other than the polymer. The vapor-liquid equilibrium calculation has many varieties, but SRK (Soave-Redlich-Kwong) is used herein.

In the present invention, copolymerization is performed in the presence of a transition metal catalyst at temperatures generally ranging from -50 to 200°C, preferably from 0 to 170°C, and more preferably from 40 to 150°C. The combined vapor pressure of the hydrocarbon solvent and the monomers is generally in the range of 0.1 to 10 MPa, and preferably 0.4 to 5 MPa. More specifically, an appropriate combined vapor pressure of the hydrocarbon solvent and the monomers varies depending on the temperature. For example, a combined vapor pressure from 2.7 to 5 MPa is preferable when the temperature is 100°C or above.

The combined vapor pressure in the above range provides sufficient catalytic activity and is also advantageous in terms of equipment costs and electric power costs for equipment operation.

The polymerization method and reactor are the same as in the second process. The polymerization temperature is as described in the second process, and may be measured by the same method described above. The iodine value of the copolymer may be determined by the conventional method.

The fourth process carries out copolymerization under conditions such that the unreacted non-conjugated polyene in the polymerization solution has a concentration C (mol/L) which is less than the above-specified Cmax. This concentration leads to easy removal of the unreacted monomers, and is also preferable in that the copolymer obtained has a small content of residual unreacted non-conjugated polyene to cause less odor. The unreacted non-conjugated polyene concentration in the polymerization solution may be controlled by the same method as described in the second process.

When the polymerization temperature is less than 353.16 K (80°C), the formula Cmax = B1 × Iodine Value (IV) × $10^{\{12.25+1.16\times \log Pb+5.37\times \log(1/T)\}}$ requires B1 = 0.050, preferably B1 = 0.040, and more preferably B1 = 0.030.

When the polymerization temperature is from 353.16 K (80°C) to less than 393.16 K (120°C), the formula Cmax = B2 × Iodine Value (IV) × $10^{\{11.88+1.23\times \log Pb+5.23x\log( 1/T)\}}$ requires B2 = 0.050, preferably B2 = 0.040, and more preferably B2 = 0.030.

When the polymerization temperature is 393.16 K (120°C) or above, the formula Cmax = B3 × Iodine Value (IV) × $10^{\{19.02+1.61\times \log Pb+8.02\times \log(1/T)\}}$ requires B3 = 0.050, preferably B3 = 0.040, and more preferably B3 = 0.030.

In one embodiment of the present process, copolymerization may be carried out to obtain a copolymer having a desired iodine value (IV) by controlling the reaction conditions T, C and $P_b$ so as to satisfy the above formula.

In the present process, an ethylene/α-olefin/non-conjugated polyene copolymer is produced in the same manner as in the second process, by removing the unreacted monomers and the hydrocarbon solvent from the polymer solution without performing removal of the catalyst residue.

The ethylene/α-olefin/non-conjugated polyene copolymer thus produced has small contents of the residual unreacted non-conjugated polyene and the transition metal.

According to the first to fourth processes for producing an ethylene/α-olefin/non-conjugated polyene copolymer of the present invention, copolymerization is carried out under the specific conditions in a manner such that the unreacted monomers and the hydrocarbon solvent are removed whereas the catalyst residue is not removed. The present invention thus enables simple production of the copolymer having a low concentration of residual non-conjugated polyene and minor color development or the like. In the copolymer, the residual unreacted non-conjugated polyene is preferably present in an amount of, for example, 500 ppm or less. Herein, the residual unreacted non-conj ugated polyene content is quantitated by gas chromatography internal standard method with respect to a predetermined amount of polymer redissolved in a solvent.

Furthermore, the copolymer obtainable by the present processes preferably has a transition metal content of 20 ppm or less, and more preferably 15 ppm or less. The transition metal content in these ranges leads to a reduced level of color development, particularly at the time of heating.

The fifth copolymerization process according to the present invention comprises copolymerizing ethylene, the α-olefin and the non-conjugated polyene in the hydrocarbon solvent, and obtaining a polymer without removing the catalyst residue from the polymer solution, wherein the copolymerization is carried out under conditions satisfying the formula (1) :

$$\frac{\text{Ethylene concentration in polymerization solution (wt\%)} \times \text{Non-conjugated polyene concentration in polymer (wt\%)}}{\text{Non-conjugated polyene concentration in polymerization solution (wt\%)}} \geq 20 \quad (1)$$

The ethylene concentration in the polymerization solution is obtained from material balance or by vapor-liquid equilibrium calculation with respect to the composition of the contents other than the polymer. The vapor-liquid equilibrium calculation has many varieties, but SRK (Soave-Redlich-Kwong) is used herein.

The non-conjugated polyene content in the polymer may be determined by IR or NMR. The non-conjugated polyene concentration in the polymerization solution is obtained from material balance. In the case of batchwise polymerization, the concentration is measured at initiation and completion of the polymerization by material balance and/or vapor-liquid equilibrium calculation (herein, SRK), and the results are averaged.

In the fifth copolymerization process, it is preferred that the copolymerization is carried out using a transition metal compound in a manner such that the unreacted monomers and the hydrocarbon solvent are removed from the polymer solution whilst the catalyst residue is not removed.

Removal of the catalyst residue is the process as described in the first to fourth copolymerization processes. Particularly in the fifth process, copolymerization in which the catalyst residue is not removed may be performed in a manner such that the polymer solution is not contacted with water, an alcohol or a ketone having a volume ratio of 1/20 or more to the polymer solution.

The fifth process for producing an ethylene/α-olefin/non-conjugated polyene copolymer of the present invention enables simple production of the copolymer having a low concentration of residual non-conjugated polyene and minor color development or the like. In the copolymer, the residual unreacted non-conjugated polyene is preferably present in an amount of, for example, 500 ppm or less. Further, the transition metal content in the copolymer is preferably 20 ppm or less, and more preferably 15 ppm or less. This transition metal content leads to minor color development, particularly at the time of heating.

The transition metal compound catalyst used in the first to fifth copolymerization processes of the present invention is preferably composed of a transition metal compound of Groups 4 to 11 of the periodic table. Compounds of Ti, Zr, Hf and V are particularly preferred. As used herein, the transition metal compound catalyst refers to a polymerization catalyst that includes a transition metal compound, and may further contain other component functioning as cocatalyst as described later.

The transition metal compound catalyst is preferably capable of catalyzing copolymerization of ethylene, propylene and a non-conjugated polyene to give an ethylene/propylene/non-conjugated polyene copolymer having an ethylene content of 70 mol% and an iodine value of at least 15, when the copolymerization is carried out under conditions such that the polymerization temperature is 80°C, a reactor is employed which includes a gas phase and a liquid phase, the ethylene and propylene of the gas phase have a combined partial pressure of 0.6 MPa or above, and the non-conjugated polyene of the liquid phase has a concentration of 15 mmol/L or below.

Whether or not the transition metal compound catalyst has this capability is identified as follows:

Copolymerization is made using the transition metal compound catalyst under conditions such that the polymerization temperature is 80°C, a reactor is employed which includes a gas phase and a liquid phase, ethylene and propylene of the gas phase have a molar ratio such that the ethylene content will be 70 mol% of the total (100 mol%) of the ethylene, propylene and non-conjugated polyene in the copolymer, and further under conditions such that the ethylene and propylene of the gas phase have a combined partial pressure of 0.6 MPa, and the non-conjugated polyene of the liquid phase has a concentration of 15 mmol/L. In this copolymerization, it is allowable that the ethylene content falls in the range of 70 ± 2 mol% because the ethylene content in this range would not alter the non-conjugated polyene concentration required to obtain the same iodine value (IV). In the case where the molar ratio of the ethylene and propylene of the gas phase is unknown, the above copolymerization is performed such that the ethylene/propylene molar ratio becomes 50/50 and the ethylene content in the resultant copolymer is determined. If the ethylene content is outside the range of 70 ± 2 mol%, copolymerization is made again in a different ethylene/propylene molar ratio to find out the conditions that provide the desired copolymer. The ethylene content may be determined by NMR.

The thus-produced ethylene/propylene/non-conjugated polyene copolymer having an ethylene content of 70 mol% is then analyzed to determine whether its iodine value is 15 or above.

In practice, the combined partial pressure may be 0.6 MPa or above. Also, it is allowable if the non-conjugated polyene concentration is 15 mmol/L or below. When the transition metal compound catalyst contains the transition metal compound and, for example, a cocatalyst, a transition metal compound catalyst for confirmative polymerization refers to a catalyst that contains the aforesaid constituent components in the same proportions as the catalyst to be employed in the first to fifth polymerization process.

However, the catalyst concentration in the above confirmative polymerization may be determined appropriately.

In general, analysis is performed on a copolymer obtained after at least 0.1% of the non-conjugated polyene has been consumed.

When the transition metal compound catalyst having the above capability is employed in the first to fifth copolymerization processes, the amount of the transition metal is generally in the range of $10^{-12}$ to $10^{-2}$ mol, and preferably $10^{-10}$ to $10^{-3}$ mol per liter of the reaction volume.

Preferred transition metal compound catalyst

The transition metal compound catalyst employable in the processes for producing an ethylene/α-olefin/non-conjugated polyene copolymer is not particularly limited in terms of structure. In a preferred embodiment, the transition metal compound catalyst comprises:

(A) a transition metal compound represented by the formula (I); and preferably contains:
(B) at least one compound selected from:

(B-1) an organometallic compound;
(B-2) an organoaluminum oxy-compound; and
(B-3) a compound that reacts with the transition metal compound (A) to form an ion pair.

(A) Transition metal compound

The transition metal compound (A), a constituent of the transition metal compound catalyst used in the present invention, may be represented by the following formula (I):

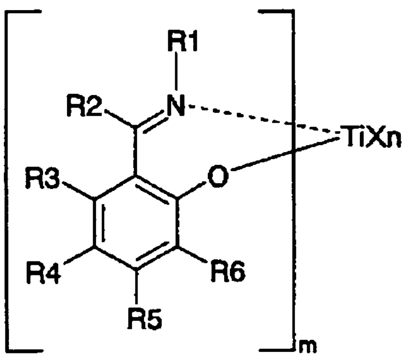

... (I)

Generally, N---Ti as in the above formula means coordination, but it is not necessarily the case in this invention.

In the formula, m is an integer of 1 to 4; R1 to R5 may be the same or different and are each a hydrogen atom, a halogen atom, a hydrocarbon group, a heterocyclic compound residue, an oxygen-containing group, a nitrogen-containing group, a boron-containing group, a sulfur-containing group, a phosphorus-containing group, a silicon-containing group, a germanium-containing group or a tin-containing group; R6 is a group selected from aliphatic hydrocarbon groups in which the carbon bonded to the phenyl group is a primary, secondary or tertiary carbon, and alicyclic hydrocarbon groups in which the carbon bonded to the phenyl group is a primary, secondary or tertiary carbon, and aromatic groups; and two or more of these substituent groups may be bonded to each other to form a ring.

R1 to R5, which may be the same or different, are each a hydrogen atom, a halogen atom, a hydrocarbon group, a heterocyclic compound residue, an oxygen-containing group, a nitrogen-containing group, a boron-containing group, a sulfur-containing group, a phosphorus-containing group, a silicon-containing group, a germanium-containing group or a tin-containing group, and two or more of them may be bonded to each other to form a ring. R1 cannot be a fluorine-containing hydrocarbon group.

When m is 2 or greater, two of the groups R1 to R5 may be bonded to each other.

Examples of the halogen atom include fluorine, chlorine, bromine and iodine.

Examples of the hydrocarbon group include linear or branched alkyl groups of 1 to 30, preferably 1 to 20 carbon atoms, such as methyl, ethyl, n-propyl, isopropyl, n-butyl, isobutyl, sec-butyl, t-butyl, neopentyl and n-hexyl groups;

linear or branched alkenyl groups of 2 to 30, preferably 2 to 20 carbon atoms, such as vinyl, allyl and isopropenyl

groups;

linear or branched alkynyl groups of 2 to 30, preferably 2 to 20 carbon atoms, such as ethynyl and propargyl groups;

cyclic saturated hydrocarbon groups of 3 to 30, preferably 3 to 20 carbon atoms, such as cyclopropyl, cyclobutyl, cyclopentyl, cyclohexyl and adamantyl groups;

cyclic unsaturated hydrocarbon groups of 5 to 30 carbon atoms, such as cyclopentadienyl, indenyl and fluorenyl groups;

aryl groups of 6 to 30, preferably 6 to 20 carbon atoms, such as phenyl, naphthyl, biphenyl, terphenyl, phenanthryl and anthracenyl groups; and

alkyl-substituted aryl groups, such as tolyl, isopropylphenyl, t-butylphenyl, dimethylphenyl and di-t-butylphenyl groups.

The above hydrocarbon groups may be substituted with a halogen at the hydrogen atom. Examples of such halogenated hydrocarbon groups include those of 1 to 30, preferably 1 to 20 carbon atoms, such as trifluoromethyl, pentafluorophenyl and chlorophenyl groups.

Also, the above hydrocarbon groups may be substituted with other hydrocarbon group. Examples of such substituted hydrocarbon groups include aryl-substituted alkyl groups, such as benzyl and cumyl groups.

Further, the hydrocarbon groups may have:

heterocyclic compound residues;
oxygen-containing groups, such as alkoxy, aryloxy, ester, ether, acyl, carboxyl, carbonate, hydroxy, peroxy and carboxylic acid anhydride groups;
nitrogen-containing groups, such as amino, imino, amido, imido, hydrazino, hydrazono, nitro, nitroso, cyano, isocyano, cyanato, amidino and diazo groups, and an ammonium salt of amino group;
boron-containing groups, such as boranediyl, boranetriyl and diboranyl groups;
sulfur-containing groups, such as mercapto, thioester, dithioester, alkylthio, arylthio, thioacyl, thioether, thiocyanate, isothiocyanate, sulfonate, sulfonamide, thiocarboxyl, dithiocarboxyl, sulfo, sulfonyl, sulfinyl and sulfenyl groups;
phosphorus-containing groups, such as phosphide, phosphoryl, thiophosphoryl and phosphate groups;
silicon-containing groups; germanium-containing groups; and tin-containing groups.

Of these, particularly preferable are:

the linear or branched alkyl groups of 1 to 30, preferably 1 to 20 carbon atoms, such as methyl, ethyl, n-propyl, isopropyl, n-butyl, isobutyl, sec-butyl, t-butyl, neopentyl and n-hexyl groups;
the aryl groups of 6 to 30, preferably 6 to 20 carbon atoms, such as phenyl, naphthyl, biphenyl, terphenyl, phenanthryl and anthracenyl groups; and
corresponding substituted aryl groups to the above aryl groups, which are substituted with 1 to 5 substituent groups such as halogen atoms, alkyl or alkoxy groups of 1 to 30, preferably 1 to 20 carbon atoms, and aryl or aryloxy groups of 6 to 30, preferably 6 to 20 carbon atoms.

Examples of the oxygen-containing groups, nitrogen-containing groups, boron-containing groups, sulfur-containing groups and phosphorus-containing groups are as described above.

Examples of the heterocyclic compound residues include residues of nitrogen-containing compounds such as pyrrole, pyridine, pyrimidine, quinoline and triazine; oxygen-containing compounds such as furan and pyran; and sulfur-containing compounds such as thiophene; and corresponding groups to the above heterocyclic compound residues, which are substituted with a substituent group such as an alkyl or alkoxy group of 1 to 30, preferably 1 to 20 carbon atoms.

Examples of the silicon-containing groups include silyl, siloxy, hydrocarbon-substituted silyl and hydrocarbon-substituted siloxy groups, such as methylsilyl, dimethylsilyl, trimethylsilyl, ethylsilyl, diethylsilyl, triethylsilyl, diphenylmethylsilyl, triphenylsilyl, dimethylphenylsilyl, dimethyl-t-butylsilyl and dimethyl(pentafluorophenyl)silyl groups.

Of these, methylsilyl, dimethylsilyl, trimethylsilyl, ethylsilyl, diethylsilyl, triethylsilyl, dimethylphenylsilyl and triphenylsilyl are preferable, and trimethylsilyl, triethylsilyl, triphenylsilyl and dimethylphenylsilyl are particularly preferable.

Specific examples of the hydrocarbon-substituted siloxy groups include trimethylsiloxy group.

Examples of the germanium-containing groups and the tin-containing groups include corresponding groups to the aforesaid silicon-containing groups except that the silicon is replaced by germanium or tin.

The groups R1 to R5 listed above will be described in more detail below.

The alkoxy groups include methoxy, ethoxy, n-propoxy, isopropoxy, n-butoxy, isobutoxy and t-butoxy groups.

The alkylthio groups include methylthio and ethylthio groups.

The aryloxy groups include phenoxy, 2, 6-dimethylphenoxy and 2,4,6-trimethylphenoxy groups.

The arylthio groups include phenylthio, methylphenylthio and naphthylthio groups.

The acyl groups include formyl, acetyl, benzoyl, p-chlorobenzoyl and p-methoxybenzoyl groups.

The ester groups include acetyloxy, benzoyloxy, methoxycarbonyl, phenoxycarbonyl and p-chlorophenoxycarbonyl groups.

The thioester groups include acetylthio, benzoylthio, methylthiocarbonyl and phenylthiocarbonyl groups.

The amide groups include acetamide, N-methylacetamide and N-methylbenzamide groups.

The imide groups include acetimide and benzimide groups.

The amino groups include dimethylamino, ethylmethylamino and diphenylamino groups.

The imino groups include methylimino, ethylimino, propylimino, butylimino and phenylimino groups.

The sulfonic ester groups include methyl sulfonate, ethyl sulfonate and phenyl sulfonate groups.

The sulfonamide groups include phenylsulfonamide, N-methylsulfonamide and N-methyl-p-toluenesulfonamide groups.

Two or more groups of R1 to R5, preferably neighboring groups, may be bonded to each other to form an aliphatic ring, an aromatic ring, or a hydrocarbon ring containing a heteroatom such as nitrogen. These rings may further have a substituent group

R6 is a group selected from aliphatic hydrocarbon groups in which the carbon bonded to the phenyl group is a primary, secondary or tertiary carbon, and alicyclic hydrocarbon groups in which the carbon bonded to the phenyl group is a primary, secondary or tertiary carbon, and aromatic groups.

Preferred groups R6 include:

such aliphatic hydrocarbon groups as linear or branched (secondary) alkyl groups of 1 to 30, preferably 1 to 20 carbon atoms, including methyl, ethyl, n-propyl, isopropyl, n-butyl, isobutyl, sec-butyl, neopentyl and n-hexyl;
such alicyclic hydrocarbon groups as cyclic saturated hydrocarbon groups of 3 to 30, preferably 3 to 20 carbon atoms, including cyclopropyl, cyclobutyl, cyclopentyl, cyclohexyl, 2-methylcyclohexyl, 3-methylcyclohexyl, 4-methylcyclohexyl, 4-tert-butylcyclohexyl, 2,6-dimethylcyclohexyl, 2, 4, 6-trimethylcyclohexyl, 3,5-dimethylcyclohexyl, 2,3,4,5,6-pentamethylcyclohexyl, 2,2-dimethylcyclohexyl, 2,2,6,6-tetramethylcyclohexyl, 3,3,5,5-tetramethylcyclohexyl, 3,5-di-tert-butylcyclohexyl, cycloheptyl, cyclooctyl and cyclododecyl;
such aromatic groups as aryl groups of 6 to 30, preferably 6 to 20 carbon atoms, including phenyl, benzyl, naphthyl, biphenyl, triphenyl, fluorenyl, anthranyl and phenanthryl; and
corresponding groups to the above groups, except of being substituted with alkyl groups of 1 to 30, preferably 1 to 20 carbon atoms, or aryl groups of 6 to 30, preferably 6 to 20 carbon atoms.

In particular, R6 is preferably selected from:

linear or branched (secondary) alkyl groups of 1 to 30, preferably 1 to 20 carbon atoms, including methyl, ethyl, isopropyl, isobutyl, sec-butyl and neopentyl; and
cyclic saturated hydrocarbon groups of 3 to 30, preferably 3 to 20 carbon atoms, including cyclobutyl, cyclopentyl, cyclohexyl, 2-methylcyclohexyl, 2,6-dimethylcyclohexyl, 3,5-dimethylcyclohexyl, 4-tert-butylcyclohexyl, cycloheptyl, cyclooctyl and cyclododecyl.

Also preferably, R6 is selected from aryl groups of 6 to 30, preferably 6 to 20 carbon atoms, such as phenyl, benzyl, naphthyl and anthranyl.

When m is 2 or greater, two of the groups R1 to R6 may be bonded to each other. When m is 2 or greater, each of the groups R1, groups R2, groups R3, groups R4, groups R5 and groups R6 may be a combination of the same or different groups.

n denotes a number satisfying a valence of titanium atom, and ranges from 0 to 5, preferably from 1 to 4, and more preferably from 1 to 3.

X denotes a hydrogen atom, a halogen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group or a tin-containing group. When n is 2 or greater, plural groups X may be the same or different.

The halogen atoms include fluorine, chlorine, bromine and iodine.

The hydrocarbon groups include the same ones as exemplified with respect to R1 to R5. Specifically, there can be mentioned, but not limited to, alkyl groups such as methyl, ethyl, propyl, butyl, hexyl, octyl, nonyl, dodecyl and eicosyl groups; cycloalkyl groups of 3 to 30 carbon atoms such as cyclopentyl, cyclohexyl, norbornyl and adamantyl groups; alkenyl groups such as vinyl, propenyl and cyclohexenyl groups; arylalkyl groups such as benzyl, phenylethyl

and phenylpropyl groups; and aryl groups such as phenyl, tolyl, dimethylphenyl, trimethylphenyl, ethylphenyl, propylphenyl, biphenyl, naphthyl, methylnaphthyl, anthryl and phenanthryl groups.

Examples of the hydrocarbon groups further include halogenated hydrocarbon groups, specifically hydrocarbon groups of 1 to 20 carbon atoms in which at least one hydrogen is substituted with a halogen atom.

Of these, preferable are those of 1 to 20 carbon atoms.

The heterocyclic compound residues include those exemplified for R1 to R5.

The oxygen-containing groups include the same ones as exemplified for R1 to R5. Specifically, there can be mentioned, but not limited to, hydroxyl groups; alkoxy groups such as methoxy, ethoxy, propoxy and butoxy groups; aryloxy groups such as phenoxy, methylphenoxy, dimethylphenoxy and naphthoxy groups; arylalkoxy groups such as phenylmethoxy and phenylethoxy groups; acetoxy groups; and carbonyl groups.

The sulfur-containing groups include those exemplified with respect to R1 to R5. Specifically, there can be mentioned, but not limited to, sulfonate groups such as methylsulfonate, trifluoromethanesulfonate, phenylsulfonate, benzylsulfonate, p-toluenesulfonate, trimethylbenzenesulfonate, triisobutylbenzenesulfonate, p-chlorobenzenesulfonate and pentafluorobenzenesulfonate groups; sulfinate groups such as methylsulfinate, phenylsulfinate, benzylsulfinate, p-toluenesulfinate, trimethylbenzenesulfinate and pentafluorobenzenesulfinate groups; alkylthio groups; and arylthio groups.

The nitrogen-containing groups include those exemplified for R1 to R5. Specifically, there can be mentioned, but not limited to, amino groups; alkylamino groups such as methylamino, dimethylamino, diethylamino, dipropylamino, dibutylamino and dicyclohexylamino groups; arylamino groups and alkylarylamino groups such as phenylamino, diphenylamino, ditolylamino, dinaphthylamino and methylphenylamino groups.

The boron-containing groups include $BR_4$ (wherein R is a hydrogen atom, an alkyl group, an aryl group which may have a substituent group, a halogen atom or the like).

The phosphorus-containing groups include without limiting thereto trialkylphosphine groups such as trimethylphosphine, tributylphosphine and tricyclohexylphosphine groups; triarylphosphine groups such as triphenylphosphine and tritolylphosphine groups; phosphite groups such as methylphosphite, ethylphosphite and phenylphosphite groups; phosphonic acid groups; and phosphinic acid groups.

The silicon-containing groups include the same ones as exemplified for R1 to R6. Specifically, there can be mentioned, but not limited to, hydrocarbon-substituted silyl groups such as phenylsilyl, diphenylsilyl, trimethylsilyl, triethylsilyl, tripropylsilyl, tricyclohexylsilyl, triphenylsilyl, methyldiphenylsilyl, tritolylsilyl and trinaphthylsilyl groups; hydrocarbon-substituted silylether groups such as trimethylsilylether group; silicon-substituted alkyl groups such as trimethylsilylmethyl group; and silicon-substituted aryl groups such as trimethylsilylphenyl group.

The germanium-containing groups include those exemplified for $R^1$ to $R^6$. Specifically, there can be mentioned corresponding groups to the aforesaid silicon-containing groups except that the silicon is replaced by germanium.

The tin-containing groups include the same ones as mentioned with respect to R1 to R5. Specifically, there can be mentioned corresponding groups to the aforesaid silicon-containing groups except that the silicon is replaced by tin.

The halogen-containing group include without limiting thereto fluorine-containing groups such as $PF_6$ and $BF_4$; chlorine-containing groups such as $ClO_4$ and $SbCl_6$; and iodine-containing groups such as $IO_4$.

The aluminum-containing groups include $AlR_4$ (wherein R is a hydrogen atom, an alkyl group, an aryl group which may have a substituent group, a halogen atom, or the like), but are not limited thereto.

When n is 2 or greater, plural groups X may be the same or different and may be bonded to each other to form a ring.

The following are illustrative and non-limiting examples of the transition metal compounds (A) of the formula (1) :

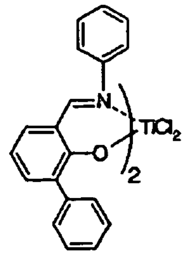
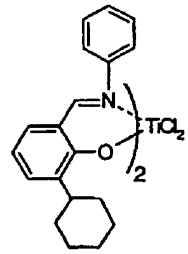
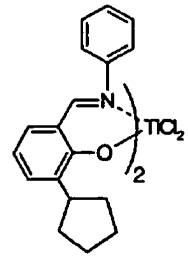
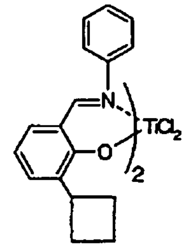

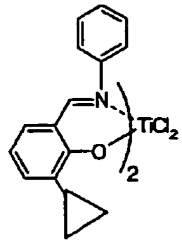
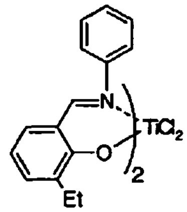
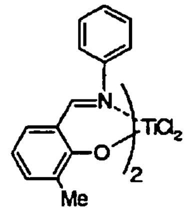
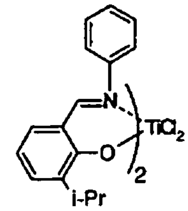

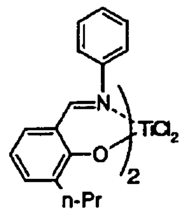
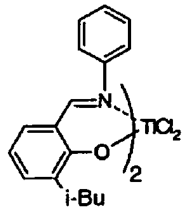
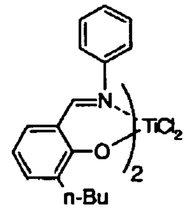
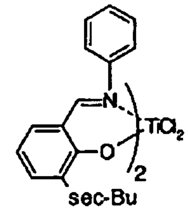

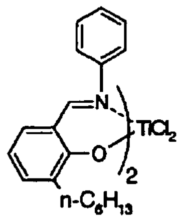
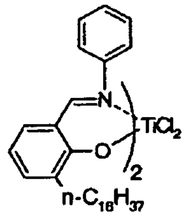
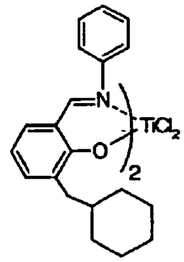
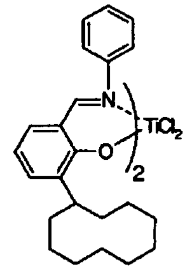

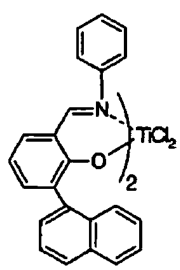
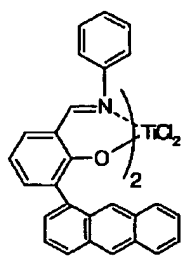
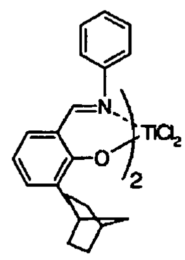
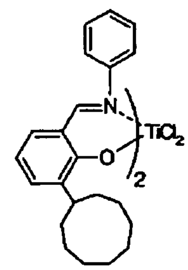

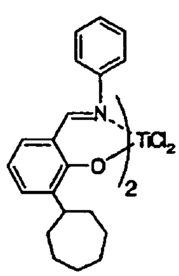
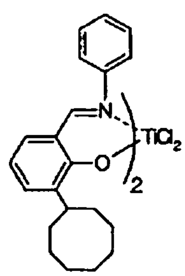
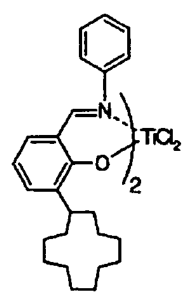
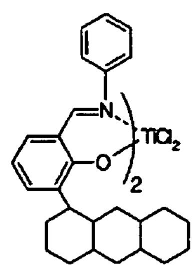

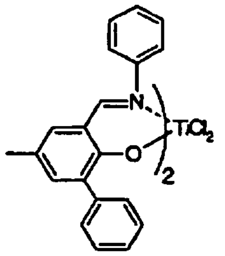
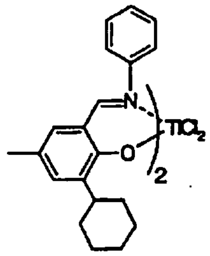
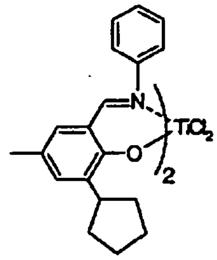
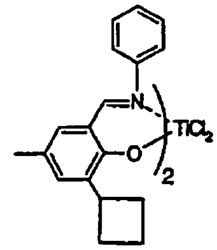

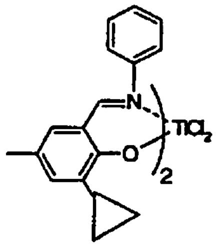
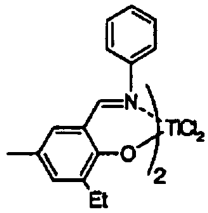
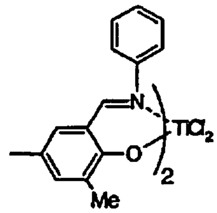
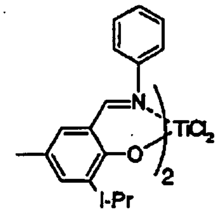

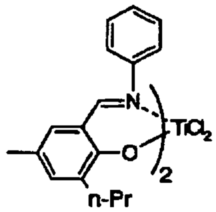
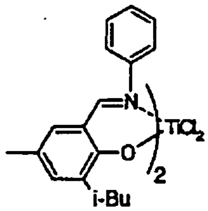
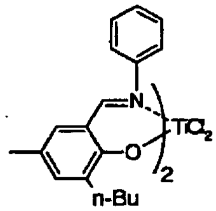
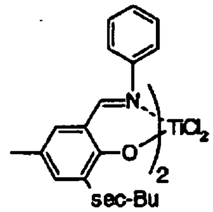

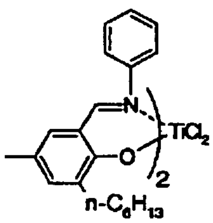
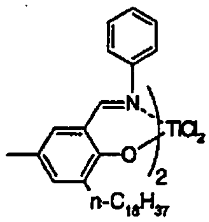
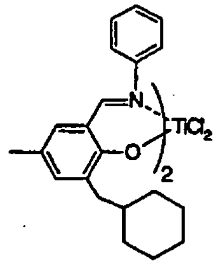
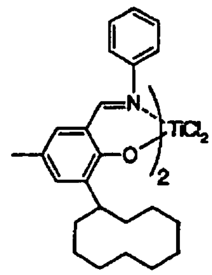

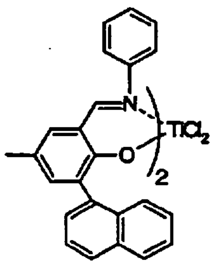
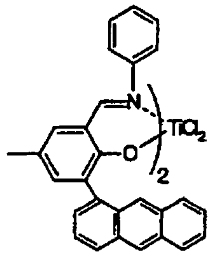
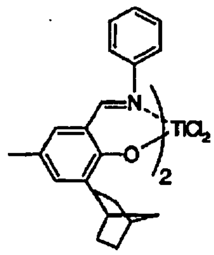
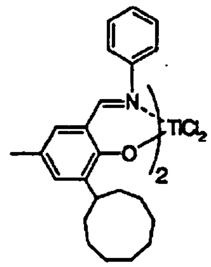

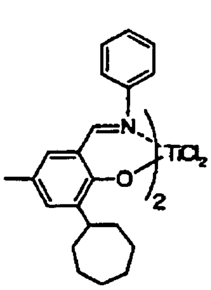
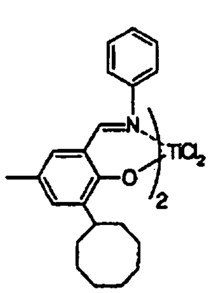
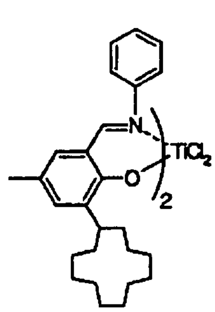
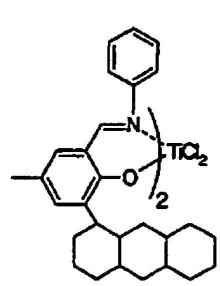

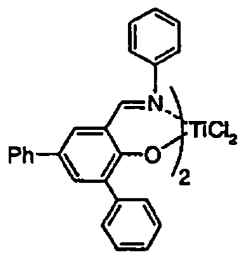
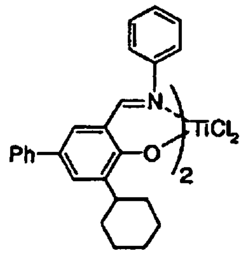
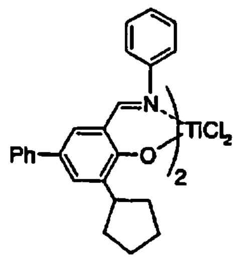
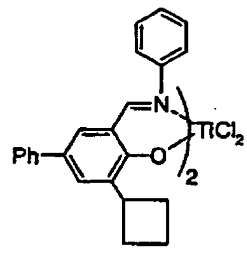
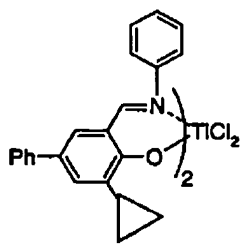
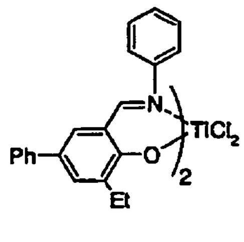
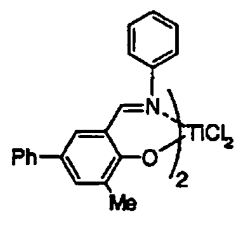
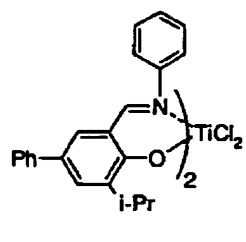
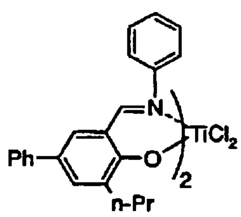
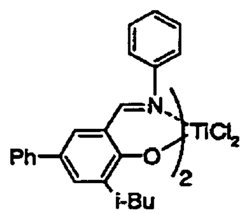
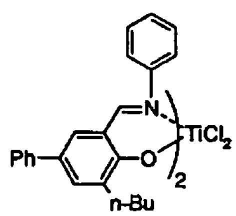
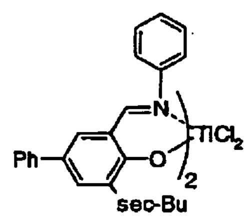
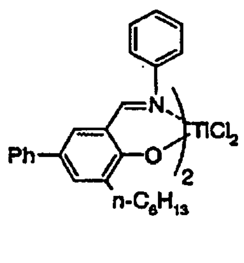
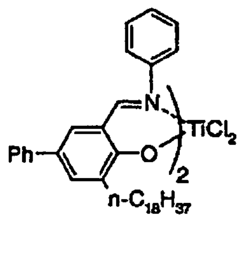
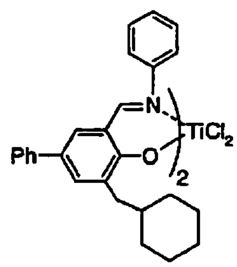
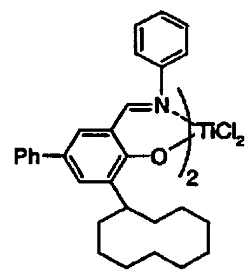
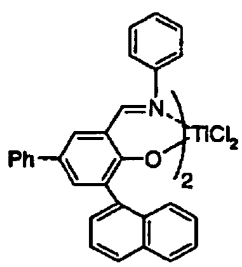
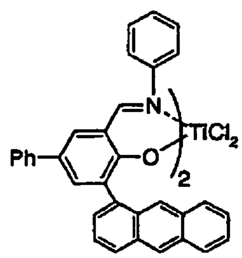
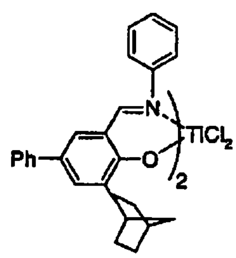
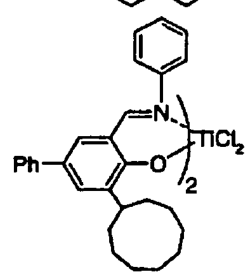
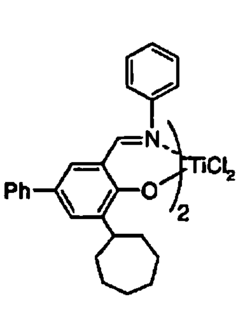
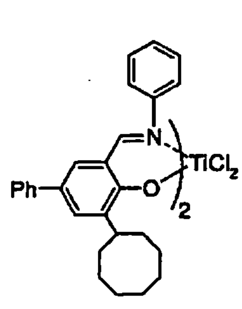
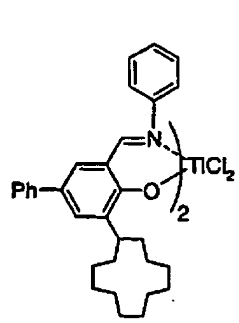
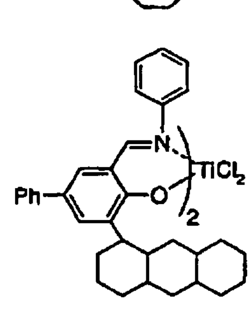

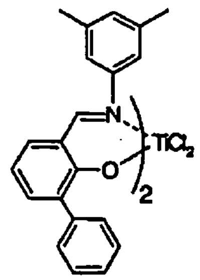 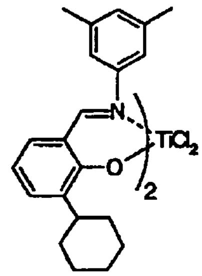 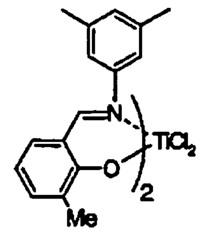 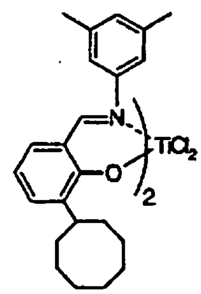

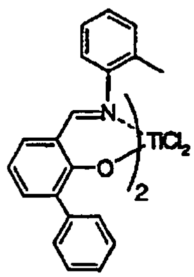 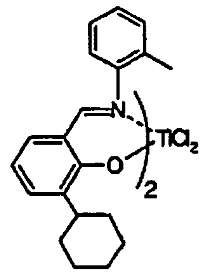 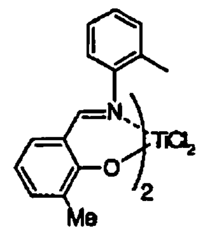 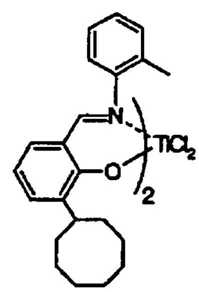

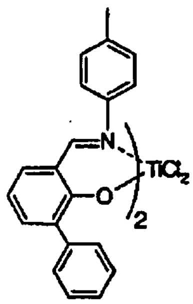 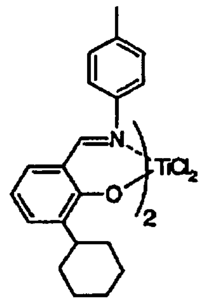 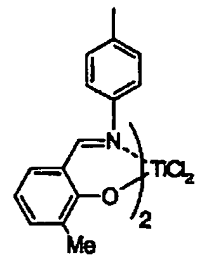 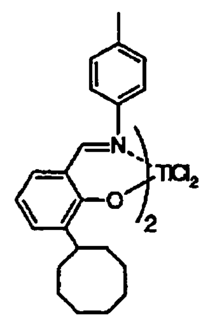

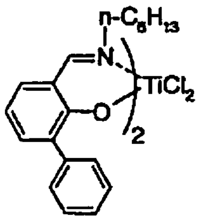 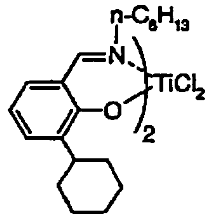 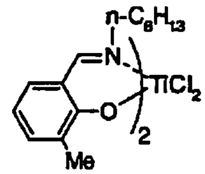 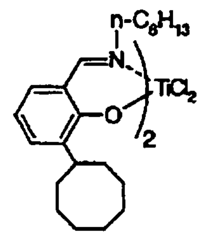

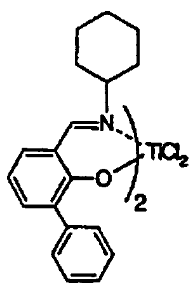 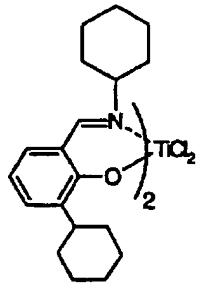 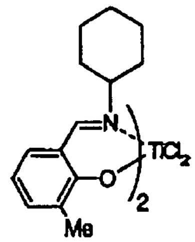 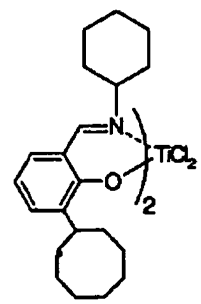

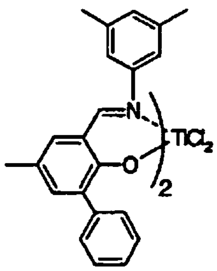
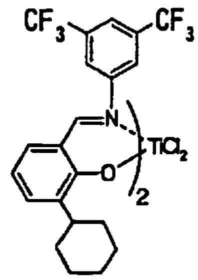
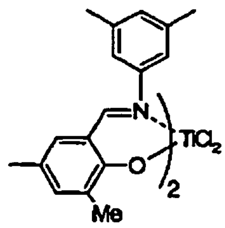
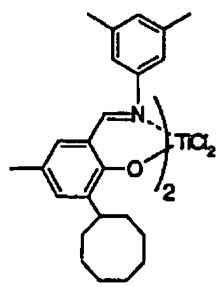

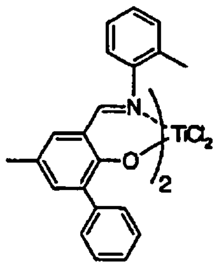
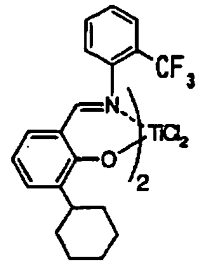
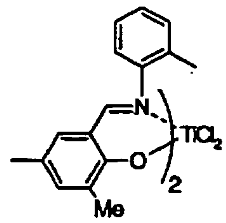
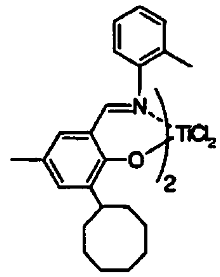

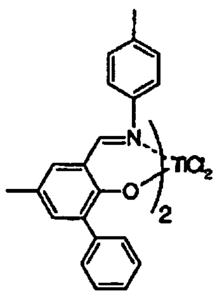
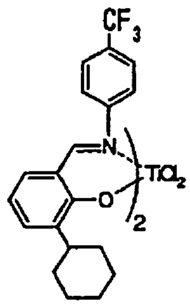
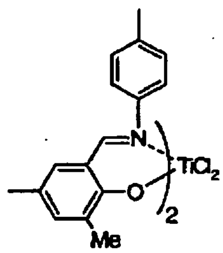
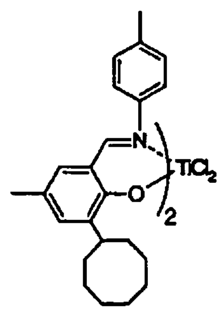

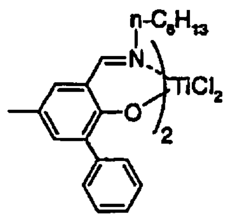
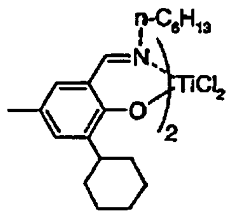
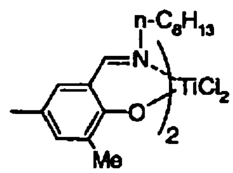
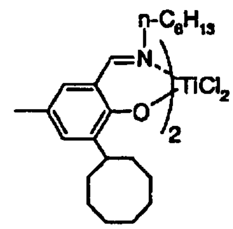

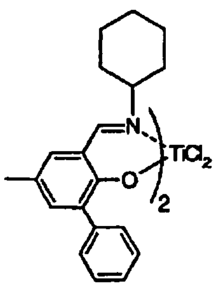
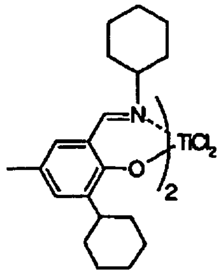
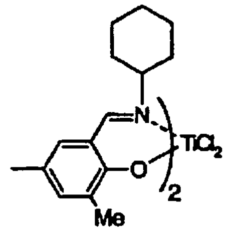
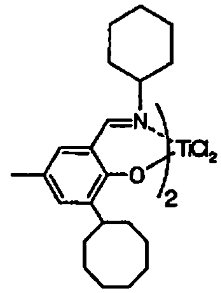

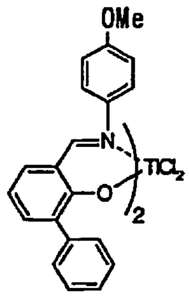
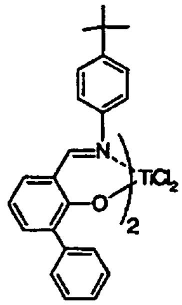
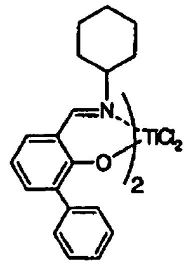
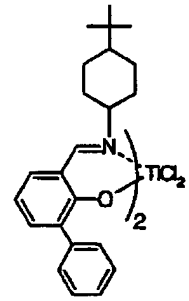
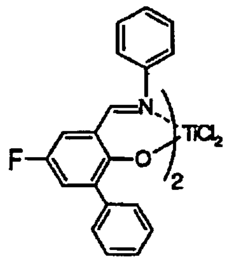
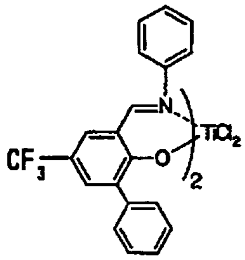
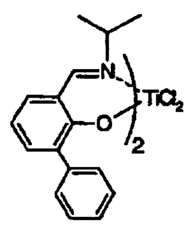
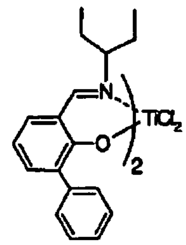
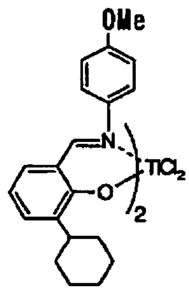
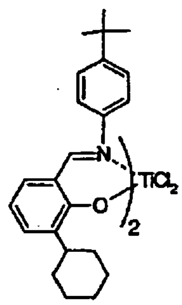
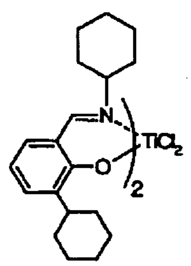
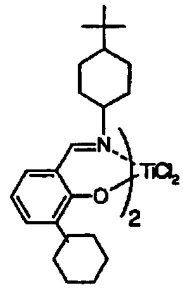
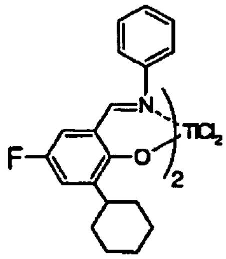
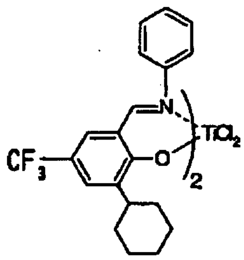
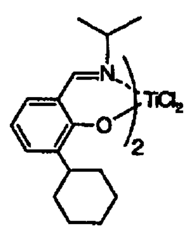
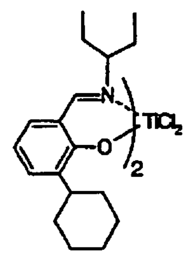
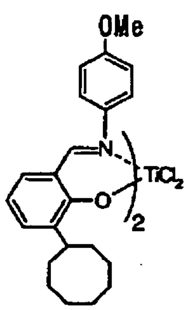
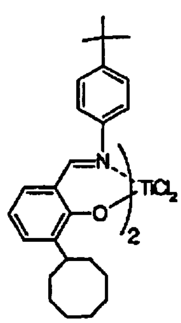
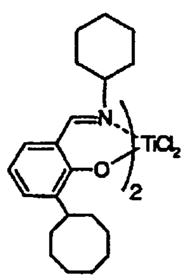
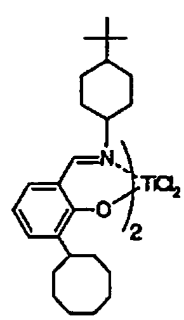

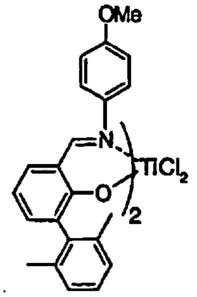
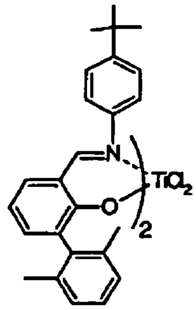
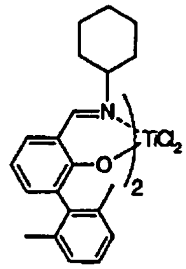
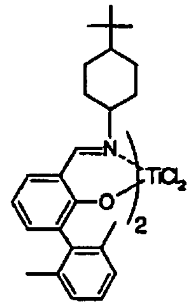
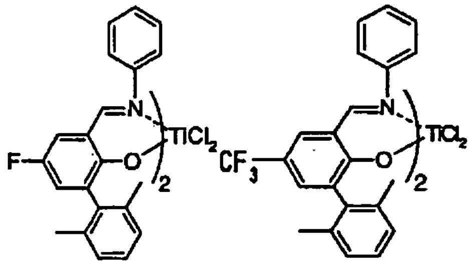
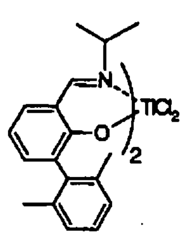
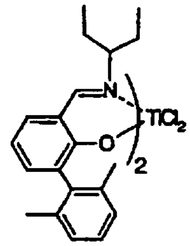
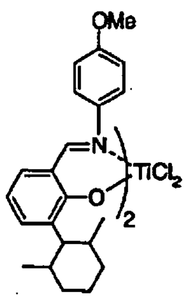
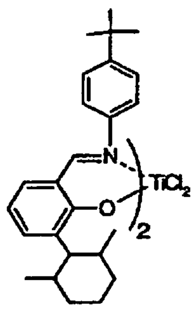
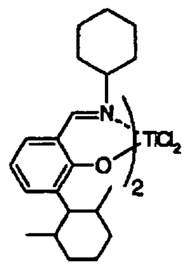
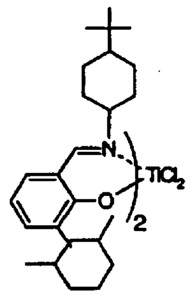
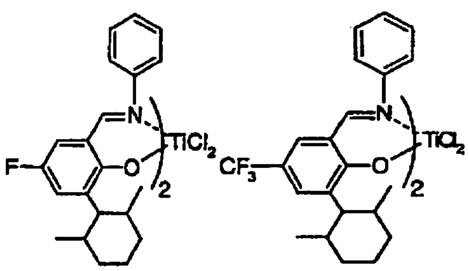
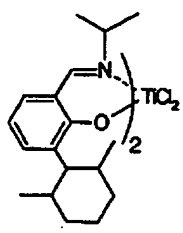
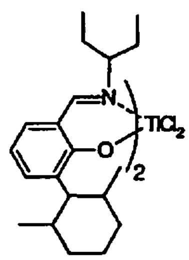
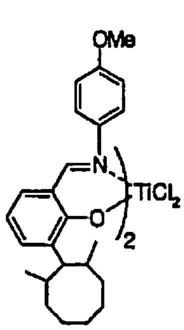
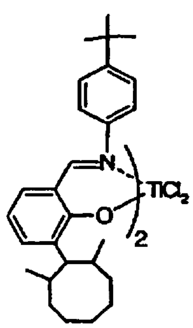
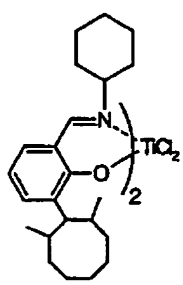
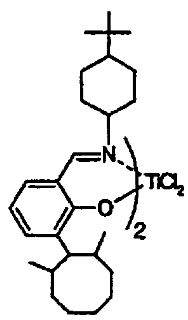

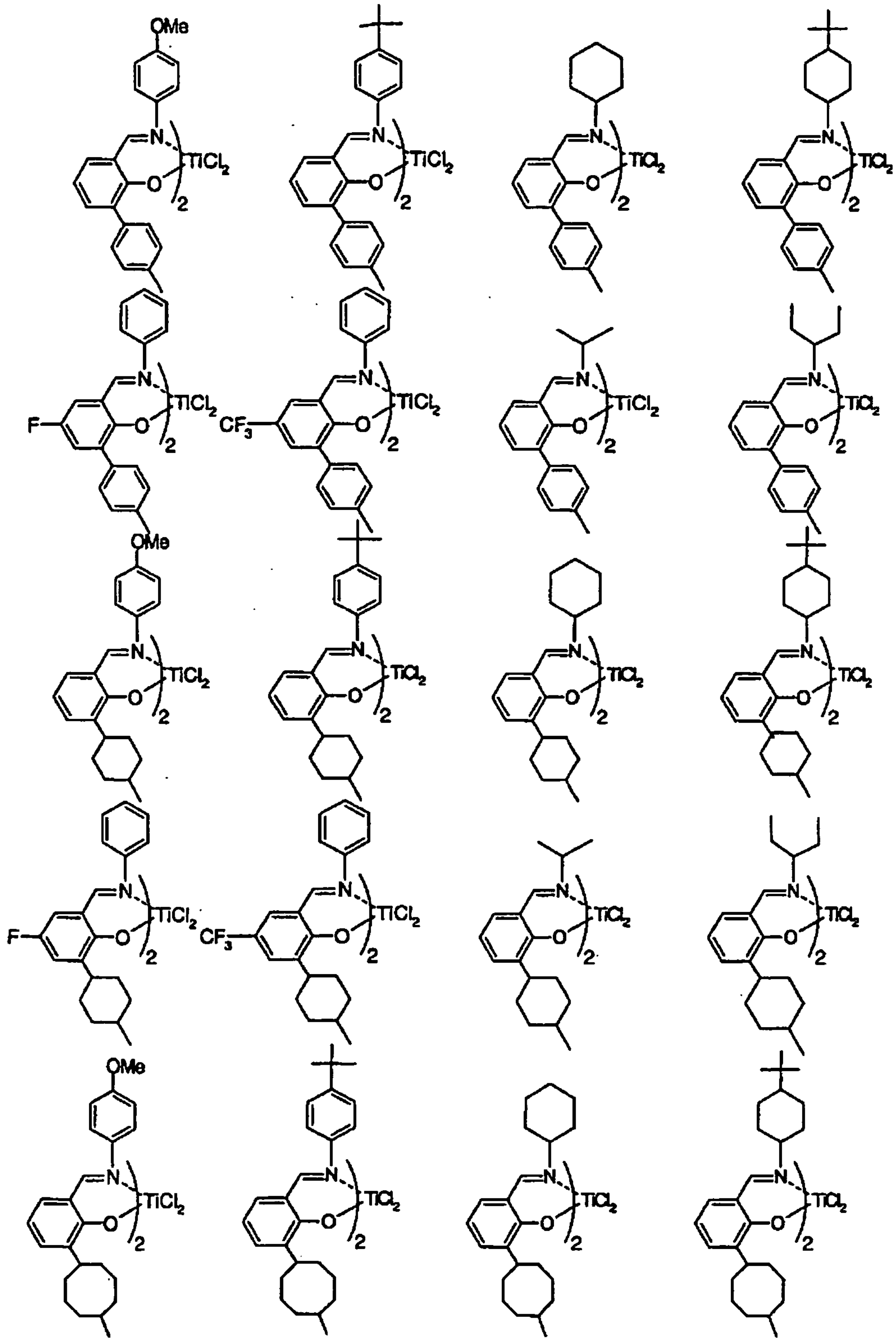

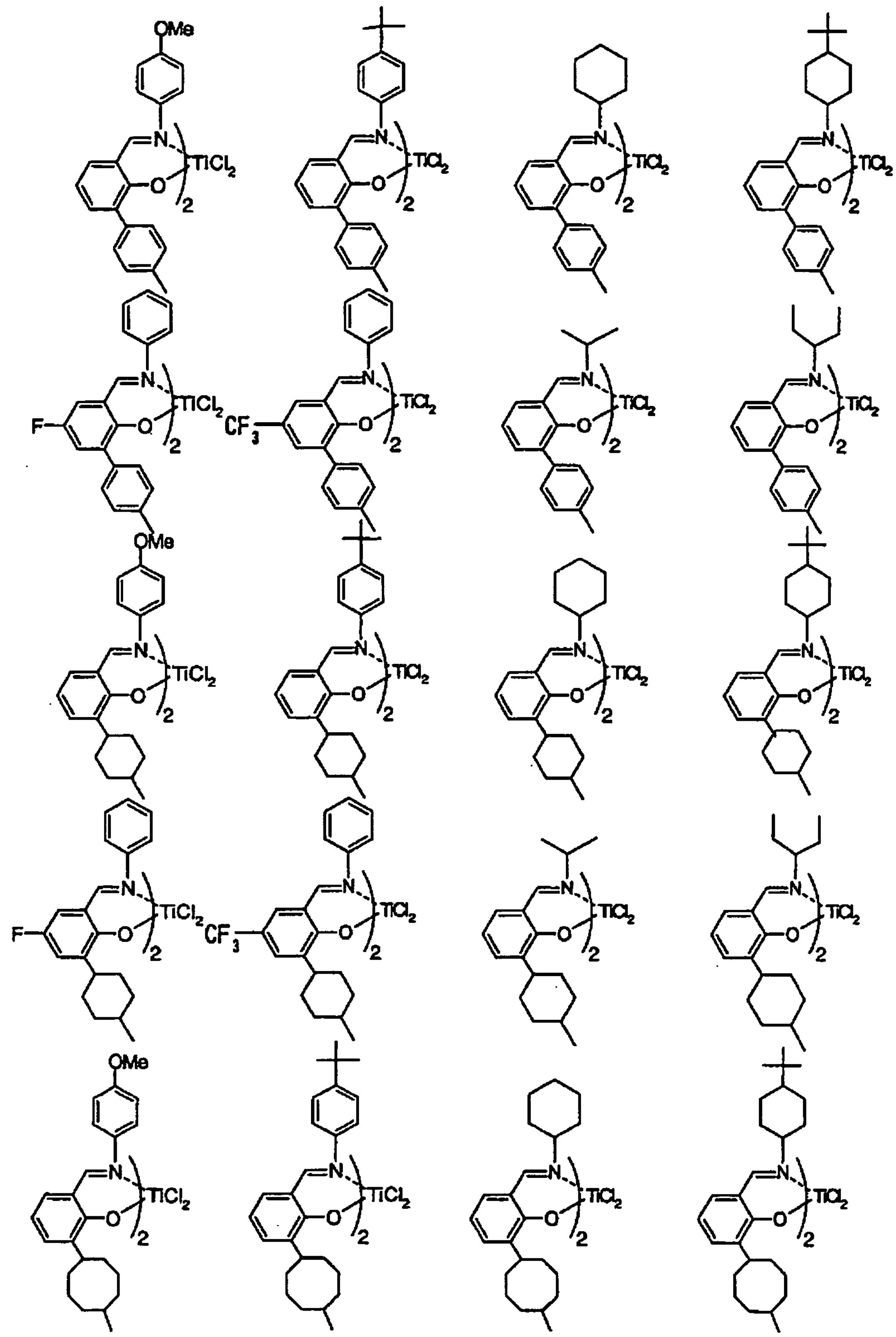

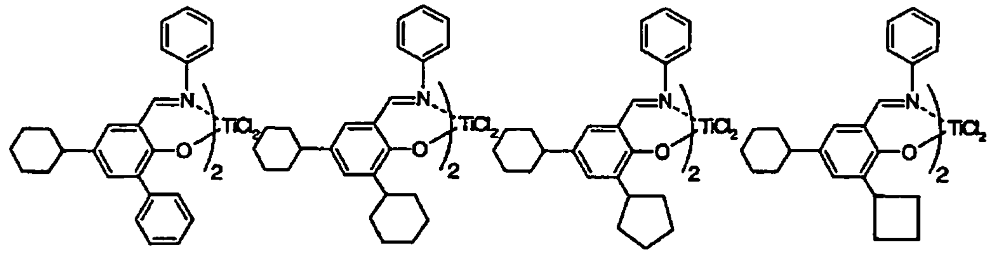

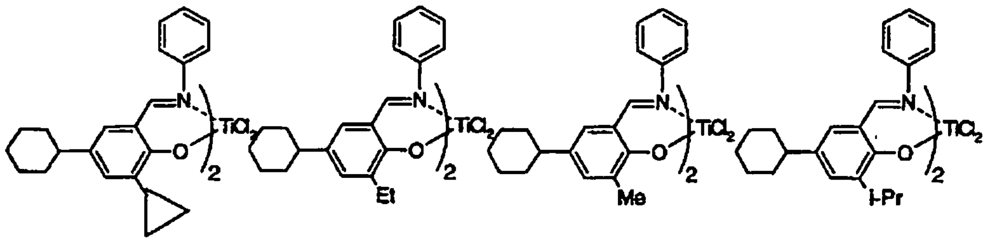

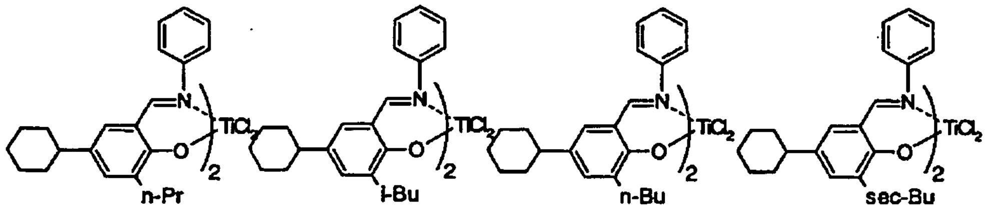

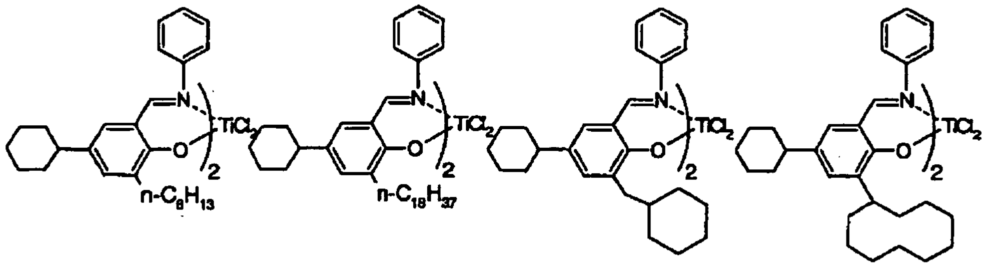

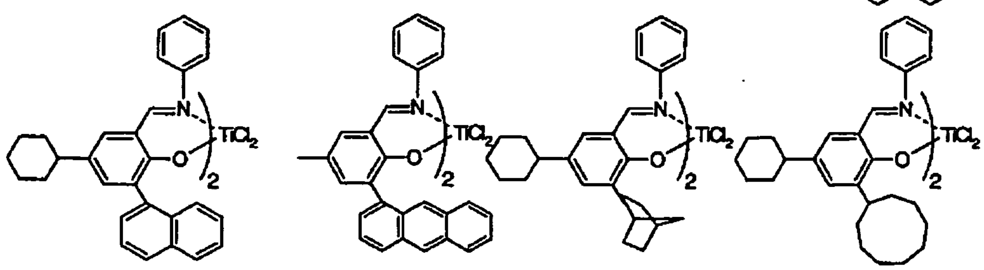

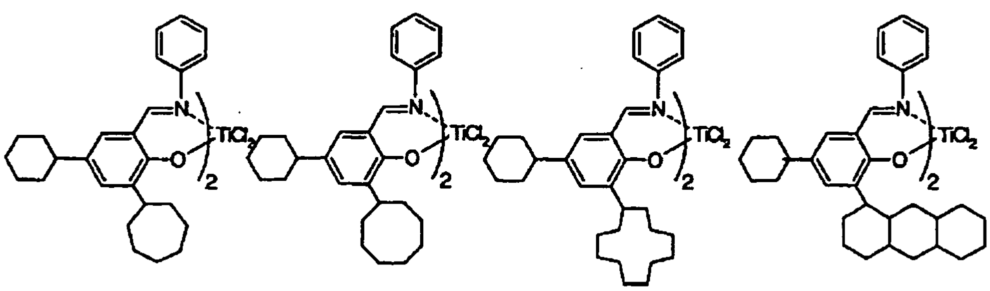

In the above formulae, denoted are a methyl group by Me, an ethyl group by Et, a normal propyl group by n-Pr, an isopropyl group by i-Pr, a normal butyl group by n-Bu, an isobutyl group by i-Bu, a secondary butyl group by sec-Bu and a phenyl group by Ph.

There is particularly no limitation as to the process for producing the transition metal compounds (A). An exemplary process will be described below.

First, the ligand constituting the transition metal compound (A) is yielded by reacting a salicylaldehyde compound with a primary amine compound represented by $R1\text{-}NH_2$ (wherein R1 is as defined above), such as an alkylamine compound. Specifically, both starting compounds are dissolved in a solvent. The solvent used herein may be a common one for such reaction, but is preferably an alcohol solvent such as methanol or ethanol, or a hydrocarbon solvent such as toluene. Subsequently, the above-prepared solution is stirred for about 1 to 48 hours at room temperature to a reflux temperature to yield a corresponding ligand in a good yield. In the synthesis of the ligand compound, an acid catalyst such as formic acid, acetic acid or paratoluenesulfonic acid may be employed. Also, use of a dehydrating agent such as molecular sieves, anhydrous magnesium sulfate or anhydrous sodium sulfate, or dehydration by a Dean-Stark apparatus is effective for the progress of the reaction.

The ligand thus obtained is then reacted with a transition metal-containing compound to synthesize a corresponding transition metal compound. Specifically, the ligand synthesized is dissolved in a solvent, and if necessary contacted with a base to prepare a phenoxide salt, then mixed with a metal compound such as a metallic halide or a metallic alkylate at a low temperature, and stirred for about 1 to 48 hours at -78°C to room temperature or under reflux. The solvent used herein may be a common one for such reaction, but is preferably a polar solvent such as ether or tetrahydrofuran (THF), or a hydrocarbon solvent such as toluene. Examples of the base used in preparing the phenoxide salt include, but not limited to, metallic salts, including lithium salts such as n-butyllithium and sodium salts such as sodium hydride, and triethylamine and pyridine.

Depending on the properties of the metal compound, it is possible to synthesize a corresponding transition metal compound by reacting the ligand directly with the compound without preparation of the phenoxide salt. Further, the transition metal M in the synthesized transition metal compound can be replaced by other transition metal by a conventional method. Also, where one or more of R1 to R6 are hydrogen, such hydrogen may be substituted with another kind of substituent group at an arbitrary stage in synthesis.

A reaction solution of the ligand and the metal compound may be used directly in the polymerization without isolating the transition metal compound therefrom.

(B-1) Organometallic compound

The organometallic compounds (B-1) for use in the invention are, for example, the following organometallic compounds of Groups 1, 2, 12 and 13 of the periodic table.

(B-1a) Organoaluminum compounds represented by the formula:

$$R^a{}_mAl\,(OR^b)_nH_pX_q$$

wherein $R^a$ and $R^b$, which may be the same or different, are each a hydrocarbon group of 1 to 15, preferably 1 to 4 carbon atoms, X is a halogen atom, $0<m\leq 3$, $0\leq n<3$, $0\leq p<3$, $0\leq q<3$ and $m+n+p+q=3$ .

(B-1b) Alkyl complex compounds of Group 1 metals of the periodic Table and aluminum, represented by the formula:

$$M^2AlR^a{}_4$$

wherein $M^2$ is Li, Na or K, and $R^a$ is a hydrocarbon group of 1 to 15, preferably 1 to 4 carbon atoms.

(B-1c) Dialkyl compounds of Group 2 or 12 metals of the Periodic Table, represented by the formula:

$$R^aR^bM^3$$

wherein $R^a$ and $R^b$, which may be the same or different, are each a hydrocarbon group of 1 to 15, preferably 1 to 4 carbon atoms, and $M^3$ is Mg, Zn or Cd.

Examples of the organoaluminum compounds (B-1a) include the following compounds:

Organoaluminum compounds represented by the formula:

$$R^a_mAl\ (OR^b)_{3-n}$$

wherein $R^a$ and $R^b$, which may be the same or different, are each a hydrocarbon group of 1 to 15, preferably 1 to 4 carbon atoms, and $1.5 \leq m \leq 3$.

Organoaluminum compounds represented by the formula:

$$R^a_mAlX_{3-m}$$

wherein $R^a$ is a hydrocarbon group of 1 to 15, preferably 1 to 4 carbon atoms, X is a halogen atom, and $0<m<3$.

Organoaluminum compounds represented by the formula:

$$R^a_mAlH_{3-m}$$

wherein $R^a$ is a hydrocarbon group of 1 to 15, preferably 1 to 4 carbon atoms, and $2 \leq m<3$.

Organoaluminum compounds represented by the formula:

$$R^a_mAl\ (OR^b)_nX_q$$

wherein $R^a$ and $R^b$, which may be the same or different, are each a hydrocarbon group of 1 to 15, preferably 1 to 4 carbon atoms, X is a halogen atom, $0<m \leq 3$, $0 \leq n<3$, $0 \leq q<3$ and $m+n+q=3$.

Specific examples of the organoaluminum compounds (B-1a) include:

tri-n-alkylaluminums such as trimethylaluminum, triethylaluminum, tri-n-butylaluminum, tripropylaluminum, tripentylaluminum, trihexylaluminum, trioctylaluminum and tridecylaluminum;
tri-branched-chain alkylaluminums such as triisopropylaluminum, triisobutylaluminum, tri-sec-butylaluminum, tri-tert-butylaluminum, tri-2-methylbutylaluminum, tri-3-methylbutylaluminum, tri-2-methylpentylaluminum, tri-3-methylpentylaluminum, tri-4-methylpentylaluminum, tri-2-methylhexylaluminum, tri-3-methylhexylaluminum and tri-2-ethylhexylaluminum;
tricycloalkylaluminums such as tricyclohexylaluminum and tricyclooctylaluminum;
triarylaluminums such as triphenylaluminum and tritolylaluminum;
dialkylaluminum hydrides such as diisobutylaluminum hydride;
trialkenylaluminums represented by the formula $(i\text{-}C_4H_9)_xAl_y(C_5H_{10})_z$ (wherein x, y and z are positive numbers, and $z \geq 2x$), such as triisoprenylaluminum;
alkylaluminum alkoxides such as isobutylaluminum methoxide, isobutylaluminum ethoxide and isobutylaluminum isopropoxide;
dialkylaluminum alkoxides such as dimethylaluminum methoxide, diethylaluminum ethoxide and dibutylaluminum butoxide;
alkylaluminum sesquialkoxides such as ethylaluminum sesquiethoxide and butylaluminum sesquibutoxide;
partially alkoxylated alkylaluminums having an average composition represented by $R^a_{2.5}Al(OR^b)_{0.5}$;
dialkylaluminum aryloxides such as diethylaluminum phenoxide, diethylaluminum(2,6-di-t-butyl-4-methylphenoxide), ethylaluminum bis(2,6-di-t-butyl-4-methylphenoxide), diisobutylalumium(2,6-di-t-butyl-4-methylphenoxide) and isobutylaluminum bis(2,6-di-t-butyl-4-methylphenoxide);
dialkylaluminum halides such as dimethylaluminum chloride, diethylaluminum chloride, dibutylaluminum chloride, diethylaluminum bromide and diisobutylaluminum chloride;
alkylaluminum sesquihalides such as ethylaluminum sesquichloride, butylaluminum sesquichloride and ethylaluminum sesquibromide;
partially halogenated alkylaluminums such as alkylaluminum dihalides, including ethylaluminum dichloride, propylaluminum dichloride and butylaluminum dibromide;
dialkylaluminum hydrides such as diethylaluminum hydride and dibutylaluminum hydride;
partially hydrogenated alkylaluminums such as alkylaluminum dihydrides, including ethylaluminum dihydride and propylaluminum dihydride; and
partially alkoxylated and halogenated alkylaluminums such as ethylaluminum ethoxychloride, butylaluminum butoxychloride and ethylaluminum ethoxybromide.

Also employable are compounds analogous to the organoaluminum compounds (B-1a). Examples are organoaluminum compounds in which two or more aluminum compounds are combined through a nitrogen atom, such as $(C_2H_5)_2AlN$ $(C_2H_5)$ Al $(C_2H_5)_2$.

Examples of the organoaluminum compounds (B-1b) include those represented by $LiAl(C_2H_5)_4$ and LiAl $(C_7H_{15})_4$. Further, other compounds are also employable as the organometallic compounds (B-1), including methyllithium, ethyllithium, propyllithium, butyllithium, methylmagnesium bromide, methylmagnesium chloride, ethylmagnesium bromide, ethylmagnesium chloride, propylmagnesium bromide, propylmagnesium chloride, butylmagnesium bromide, butylmagnesium chloride, dimethylmagnesium, diethylmagnesium, dibutylmagnesium and butylethylmagnesium.

Furthermore, combinations of compounds capable of forming the aforesaid organoaluminum compounds in the polymerization system are also employable, such as combinations of halogenated aluminums and alkyllithiums and combinations of halogenated aluminums and alkylmagnesiums.

Of the organometallic compounds (B-1) mentioned above, the organoaluminum compounds are preferable.

The organometallic compounds (B-1) may be used singly or in combination of two or more kinds.

(B-2) Organoaluminum oxy-compound

The organoaluminum oxy-compounds (B-2) for use in the invention may be conventional aluminoxanes or benzene-insoluble organoaluminum oxy-compounds as described in JP-A-H02-78687.

The conventional aluminoxanes may be prepared by, for example, the following processes, and are usually obtained as solutions in hydrocarbon solvents. (1) A process wherein an organoaluminum compound such as trialkylaluminum is added to a hydrocarbon medium suspension of a compound containing adsorbed water or a salt containing water of crystallization, such as magnesium chloride hydrate, copper sulfate hydrate, aluminum sulfate hydrate, nickel sulfate hydrate or cerous chloride hydrate, thereby to react the adsorbed water or water of crystallization with the organoaluminum compound.

(2) A process wherein water, ice or water vapor is allowed to act directly on an organoaluminum compound such as trialkylaluminum in a medium such as benzene, toluene, ethyl ether or tetrahydrofuran.

(3) A process wherein an organotin oxide such as dimethyltin oxide or dibutyltin oxide is allowed to react with an organoaluminum compound such as trialkylaluminum in a medium such as decane, benzene or toluene.

The aluminoxanes may contain a small amount of an organometallic component. After the solvent or the unreacted organoaluminum compound has been distilled off from the recovered solution of aluminoxane, the remainder may be redissolved in a solvent or suspended in a poor solvent for the aluminoxane.

Examples of the organoaluminum compound used in preparing the aluminoxane include the same organoaluminum compounds described as the organoaluminum compounds (B-1a).

Of these, the trialkylaluminums and tricycloalkylaluminums are preferable, and trimethylaluminum and triisobutylaluminum are particularly preferable.

The organoaluminum compounds may be used singly or in combination of two or more kinds.

Examples of the solvent used in preparation of the aluminoxane include aromatic hydrocarbons such as benzene, toluene, xylene, cumene and cymene; aliphatic hydrocarbons such as pentane, hexane, heptane, octane, decane, dodecane, hexadecane and octadecane; alicyclic hydrocarbons such as cyclopentane, cyclohexane, cyclooctane and methylcyclopentane; petroleum fractions such as gasoline, kerosine and gas oil; and halides of these aromatic, aliphatic and alicyclic hydrocarbons, particularly chlorides and bromides thereof. Also employable are ethers such as ethyl ether and tetrahydrofuran. Of the solvents, the aromatic hydrocarbons and aliphatic hydrocarbons are particularly preferable.

The benzene-insoluble organoaluminum oxy-compound used in the invention preferably has a content of Al component which dissolves in benzene at 60°C of usually not more than 10%, preferably not more than 5%, and particularly preferably not more than 2%, in terms of Al atom. That is, the benzene-insoluble organoaluminum oxy-compound is preferably insoluble or hardly soluble in benzene.

The organoaluminum oxy-compound employed in the invention is, for example, a boron-containing organoaluminum oxy-compound represented by the following formula (IV):

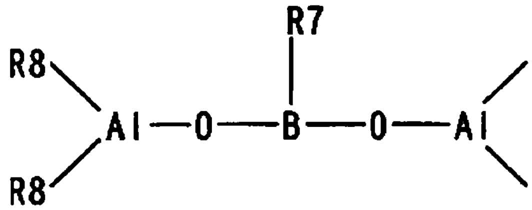

· · · (IV)

wherein R7 is a hydrocarbon group of 1 to 10 carbon atoms, and the groups R8 may be the same or different and are each a hydrogen atom, a halogen atom or a hydrocarbon group of 1 to 10 carbon atoms.

The boron-containing organoaluminum oxy-compound of the formula (IV) can be prepared by reacting an alkylboronic acid represented by the following formula (V) with an organoaluminum compound in an inert solvent under an inert gas atmosphere at a temperature of -80°C to room temperature for 1 minute to 24 hours:

$$R7\text{-}B\text{-}(OH)_2 \qquad (V)$$

wherein R7 is the same as mentioned above.

Examples of the alkylboronic acids represented by the formula (V) include methylboronic acid, ethylboronic acid, isopropylboronic acid, n-propylboronic acid, n-butylboronic acid, isobutylboronic acid, n-hexylboronic acid, cyclohexylboronic acid, phenylboronic acid, 3,5-difluoroboronic acid, pentafluorophenylboronic acid and 3,5-bis(trifluoromethyl)phenylboronic acid.

Of these, preferable are methylboronic acid, n-butylboronic acid, isobutylboronic acid, 3,5-difluorophenylboronic acid and pentafluorophenylboronic acid. These alkylboronic acids may be used singly or in combination of two or more kinds.

Examples of the organoaluminum compounds to be reacted with the alkylboronic acids include the same organoaluminum compounds described as the organoaluminum compounds (B-1a)

Of these, the trialkylaluminums and tricycloalkylaluminums are preferable, and trimethylaluminum, triethylaluminum and triisobutylaluminum are particularly preferable. These organoaluminum compounds may be used singly or in combination of two or more kinds.

The organoaluminum oxy-compounds (B-2) described above may be used singly or in combination of two or more kinds. (B-3) Compound that reacts with the transition metal compound to form an ion pair

Examples of the compound (B-3) that reacts with the transition metal compound (A) to form an ion pair (hereinafter, referred to as "ionizing ionic compound") include the Lewis acids, ionic compounds, borane compounds and carborane compounds described in JP-A-H01-501950, JP-A-H01-502036, JP-A-H03-179005, JP-A-H03-179006, JP-A-H03-207703 and JP-A-H03-207704, and U.S. Patent No. 5,321,106. Further, heteropoly compounds and isopoly compounds are also employable.

Examples of the Lewis acids include compounds represented by $BR_3$ (wherein R is a phenyl group which may have a substituent group such as fluorine, methyl or trifluoromethyl, or a fluorine atom), such as trifluoroboron, triphenylboron, tris(4-fluorophenyl)boron, tris(3,5-difluorophenyl)boron, tris(4-fluoromethylphenyl)boron, tris(pentafluorophenyl)boron, tris(p-tolyl)boron, tris(o-tolyl)boron and tris(3,5-dimethylphenyl)boron.

Examples of the ionic compounds include compounds represented by the following formula:

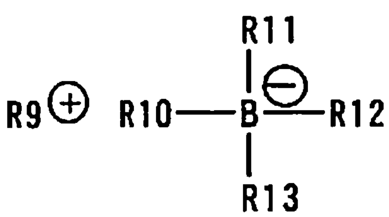

· · · (VI)

wherein $R9^+$ is, for example, $H^+$, carbonium cation, oxonium cation, ammonium cation, phosphonium cation, cycloheptyltrienyl cation or ferrocenium cation having a transition metal; and

R10 to R13 may be the same or different and are each an organic group, preferably an aryl group or a substituted

aryl group.

The carbonium cations include tri-substituted carbonium cations such as triphenylcarbonium cation, tri(methylphenyl)carbonium cation and tri(dimethylphenyl)carbonium cation.

The ammonium cations include:

trialkylammonium cations such as trimethylammonium cation, triethylammonium cation, tripropylammonium cation, tributylammonium cation and tri (n-butyl) ammonium cation;
N,N-dialkylanilinium cations such as N,N-dimethylanilinium cation, N,N-diethylanilinium cation and N,N-2,4,6-pentamethylanilinium cation; and
dialkylammonium cations such as di (isopropyl) ammonium cation and dicyclohexylammonium cation.

The phosphonium cations include triarylphosphonium cations such as triphenylphosphonium cation, tri(methylphenyl)phosphonium cation and tri(dimethylphenyl)phosphonium cation.

$R9^+$ is preferably carbonium cation or ammonium cation, and particularly preferably triphenylcarbonium cation, N,N-dimethylanilinium cation or N,N-diethylanilinium cation.

Examples of the ionic compounds further include trialkyl-substituted ammonium salts, N,N-dialkylanilinium salts, dialkylammonium salts and triarylphosphonium salts.

The trialkyl-substituted ammonium salts include triethylammoniumtetra(phenyl) borate, tripropylammoniumtetra(phenyl) borate, tri(n-butyl)ammoniumtetra(phenyl) borate, trimethylammoniumtetra(p-tolyl) borate, trimethylammoniumtetra(o-tolyl) borate, tri(n-butyl)ammoniumtetra(pentafluorophenyl) borate, tripropylammoniumtetra(o,p-dimethylphenyl) borate, tri(n-butyl)ammoniumtetra(m,m-dimethylphenyl) borate, tri(n-butyl)ammoniumtetra(p-trifluoromethylphenyl) borate, tri(n-butyl)ammoniumtetra(3,5-ditrifluoromethylphenyl) borate and tri(n-butyl)ammoniumtetra(o-tolyl) borate.

The N,N-dialkylanilinium salts include N,N-dimethylaniliniumtetra(phenyl) borate, N,N-diethylaniliniumtetra (phenyl) borate and N,N-2,4,6-pentamethylaniliniumtetra(phenyl) borate.

The dialkylammonium salts include di(1-propyl)ammoniumtetra(pentafluorophenyl) borate and dicyclohexylammoniumtetra(phenyl) borate.

Examples of the ionic compounds further include triphenylcarbeniumtetrakis(pentafluorophenyl) borate, N,N-dimethylaniliniumtetrakis(pentafluorophenyl) borate, ferroceniumtetra(pentafluorophenyl) borate, triphenylcarbeniumpentaphenylcyclopentadienyl complex, N,N-diethylaniliniumpentaphenylcyclopentadienyl complex and boron compounds represented by the following formula (VII) or (VIII) :

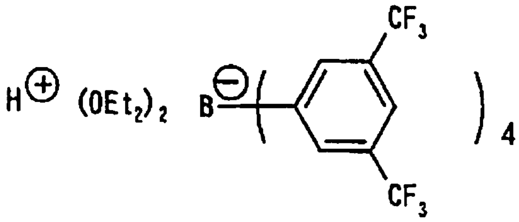

· · · (VII)

wherein Et is an ethyl group;

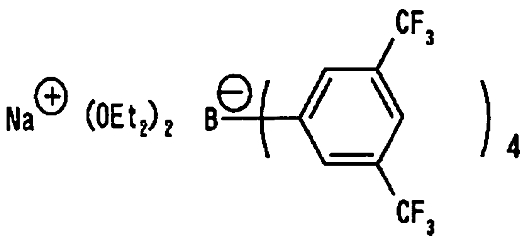

· · · (VIII)

Examples of the borane compounds include:

decaborane;
salts of anions, such as bis[tri(n-butyl)ammonium] nonaborate, bis[tri (n-butyl) ammonium] decaborate, bis [tri (n-butyl) ammonium] undecaborate, bis [tri (n-butyl) ammonium] dodecaborate, bis[tri(n-butyl)ammonium] decachlorodecaborate and bis[tri(n-butyl)ammonium] dodecachlorododecaborate; and
salts of metallic borane anions, such as tri(n-butyl)ammoniumbis(dodecahydridododecaborato) cobaltate(III) and

bis[tri(n-butyl)ammonium]bis(dodecahydridododecaborato) nickelate(III).

Examples of the carborane compounds include:

salts of anions, such as 4-carbanonaborane, 1,3-dicarbanonaborane, 6,9-dicarbadecaborane, dodecahydrido-1-phenyl-1,3-dicarbanonaborane, dodecahydrido-1-methyl-1,3-dicarbanonaborane, undecahydrido-1,3-dimethyl-1,3-dicarbanonaborane, 7,8-dicarbaundecaborane, 2,7-dicarbaundecaborane, undecahydrido-7,8-dimethyl-7,8-dicarbaundecaborane, dodecahydrido-11-methyl-2,7-dicarbaundecaborane, tri(n-butyl)ammonium-1-carbadecaborate, tri(n-butyl)ammonium-1-carbaundecaborate, tri(n-butyl)ammonium-1-carbadodecaborate, tri(n-butyl) ammonium-1-trimethylsilyl-1-carbadecaborate, tri(n-butyl)ammoniumbromo-1-carbadodecaborate, tri(n-butyl) ammonium-6-carbadecaborate, tri(n-butyl)ammonium-6-carbadecaborate, tri(n-butyl)ammonium-7-carbaundecaborate, tri(n-butyl)ammonium-7,8-dicarbaundecaborate, tri(n-butyl)ammonium-2,9-dicarbaundecaborate, tri (n-butyl) ammoniumdodecahydrido-8-methyl-7, 9-dicarbaundecaborate, tri(n-butyl)ammoniumundecahydrido-8-ethyl-7,9-dicarbaundecaborate, tri(n-butyl)ammoniumundecahydrido-8-butyl-7,9-dicarbaundecaborate, tri(n-butyl)ammoniumundecahydrido-8-allyl-7,9-dicarbaundecaborate, tri (n-butyl) ammoniumundecahydrido-9-trimethylsilyl-7, 8-dicarbaundecaborate and tri(n-butyl)ammoniumundecahydrido-4,6-dibromo-7-carbaundecaborate; and
salts of metallic carborane anions, such as tri(n-butyl)ammoniumbis(nonahydrido-1,3-dicarbanonaborato) cobaltate(III), tri(n-butyl)ammoniumbis(undecahydrido-7,8-dicarbaundecaborato) ferrate(III), tri(n-butyl)ammoniumbis (undecahydrido-7,8-dicarbaundecaborato) cobaltate(III), tri(n-butyl)ammoniumbis(undecahydrido-7,8-dicarbaundecaborato) nickelate(III), tri(n-butyl)ammoniumbis(undecahydrido-7,8-dicarbaundecaborato) cuprate(III), tri(n-butyl)ammoniumbis(undecahydrido-7,8-dicarbaundecaborato) aurate(III), tri(n-butyl)ammoniumbis(nonahydrido-7,8-dimethyl-7,8-dicarbaundecaborato) ferrate(III), tri(n-butyl)ammoniumbis(nonahydrido-7,8-dimethyl-7,8-dicarbaundecaborato) chromate(III), tri(n-butyl)ammoniumbis(tribromooctahydrido-7,8-dicarbaundecaborato) cobaltate(III), tris[tri(n-butyl)ammonium]bis(undecahydrido-7-carbaundecaborato) chromate(III), bis[tri(n-butyl)ammonium]bis(undecahydrido-7-carbaundecaborato) manganate(IV), bis[tri(n-butyl)ammonium]bis(undecahydrido-7-carbaundecaborato) cobaltate(III) and bis[tri(n-butyl)ammonium]bis(undecahydrido-7-carbaundecaborato) nickelate(IV).

The heteropoly compounds are composed of an atom selected from silicon, phosphorus, titanium, germanium, arsenic and tin, and one or more atoms selected from vanadium, niobium, molybdenum and tungsten. Specific examples thereof include without limiting thereto phosphovanadic acid, germanovanadic acid, arsenovanadic acid, phosphoniobic acid, germanoniobic acid, siliconomolybdic acid, phosphomolybdic acid, titanomolybdic acid, germanomolybdic acid, arsenomolybdic acid, stannnomolybdic acid, phosphotungstic acid, germanotungstic acid, stannotungstic acid, phosphomolybdovanadic acid, phosphotungstovanadic acid, germanotungstovanadic acid, phosphomolybdotungstovanadic acid, germanomolybdotungstovanadic acid, phosphomolybdotungstic acid, phosphomolybdoniobic acid, salts of these acids for example with Group 1 or 2 metals of the periodic table such as lithium, sodium, potassium, rubidium, cesium, beryllium, magnesium, calcium, strontium and barium, and organic salts of these acids with for example triphenylethyl.

The ionizing ionic compounds (B-3) mentioned above may be used singly or in combination of two or more

kinds.

When the transition metal compound of the invention is used as catalyst in combination with the organoaluminum oxy-compound (B-2) as cocatalyst, such as methylaluminoxane, very high polymerization activity may be achieved for olefin compounds.

The hydrocarbons used as solvent include aliphatic hydrocarbons such as propane, butane, pentane, hexane, heptane, octane, decane, dodecane and hexadecane; alicyclic hydrocarbons such as cyclopentane, cyclohexane, methylcyclopentane and cyclooctane; aromatic hydrocarbons such as benzene, toluene and xylene; halogenated hydrocarbons such as ethylene chloride, chlorobenzene and dichloromethane; petroleum fractions such as gasoline, kerosine and gas oil; and mixtures thereof. Further, the olefin per se subjected to the polymerization may be used as the hydrocarbon solvent. Of these, the aliphatic and aromatic hydrocarbons are preferred.

Where necessary, the catalyst of the present invention for ethylene/α-olefin/non-conjugated polyene copolymerization may contain a carrier (C) described below, in addition to the preferred transition metal compound (A) and at least one optional compound (B) selected from the organometallic compound (B-1), the organoaluminum oxy-compound (B-2) and the ionizing ionic compound (B-3).

(C) Carrier

The carrier (C) used in the invention is an inorganic or organic compound in the form of granular or fine particulate solids.

Preferred inorganic compound include porous oxides, inorganic chlorides, clays, clay minerals and ion-exchange layered compounds.

Examples of the porous oxides include $SiO_2$, $Al_2O_3$, MgO, ZrO, $TiO_2$, $B_2O_3$, CaO, ZnO, BaO, $ThO_2$, and complexes and mixtures containing them, such as natural or synthetic zeolites, $SiO_2$-MgO, $SiO_2$-$Al_2O_3$, $SiO_2$-$TiO_2$, $SiO_2$-$V_2O_5$, $SiO_2$-$Cr_2O_3$ and $SiO_2$-$TiO_2$-MgO. Of these, those containing $SiO_2$ and/or $Al_2O_3$ as major components are preferable. The inorganic oxides may contain small amounts of carbonate, sulfate, nitrate or oxide components such as $Na_2CO_3$, $K_2CO_3$, $CaCO_3$, $MgCO_3$, $Na_2SO_4$, $Al_2(SO_4)_3$, $BaSO_4$, $KNO_3$, $Mg(NO_3)_2$, $Al(NO_3)_3$, $Na_2O$, $K_2O$ and $Li_2O$.

Although these porous oxides have various properties depending on the type and preparation process thereof, the carrier suitable for use in the invention has particle diameters of 10 to 300 μm, preferably 20 to 200 μm, specific surface areas of 50 to 1000 $m^2$/g, preferably 100 to 700 $m^2$/g, and pore volumes of 0.3 to 3.0 $cm^3$/g. Where necessary, the carrier may be calcined at 100 to 1000°C, and preferably 150 to 700°C before use.

Examples of the inorganic chlorides include $MgCl_2$, $MgBr_2$, $MnCl_2$ and $MnBr_2$. The inorganic chlorides may be used as they are or after pulverized by a ball mill, a vibration mill or the like. Also, the inorganic chlorides may be dissolved in a solvent such as an alcohol and then precipitated by a precipitating agent to be used in the form of fine particles.

The clays for use in the invention are generally comprised of a clay mineral as major ingredient. The ion-exchange layered compounds have a crystal structure in which planes formed by ionic bonding or the like pile on one another in parallel with a weak bond strength, and they contain exchangeable ions. Most clay minerals are ion-exchange layered compounds. The clays, the clay minerals and the ion-exchange layered compounds are not limited to naturally occurring and may be synthetic.

Examples of such clays, clay minerals and ion-exchange layered compounds include clays, clay minerals, and ion crystalline compounds having such a layered crystal structure as a hexagonal closest packing type, an antimony type, a $CdCl_2$ type or a $CdI_2$ type.

Specific examples of the clays and the clay minerals include kaolin, bentonite, kibushi clay, potter's clay, allophane, hisingerite, pyrophyllite, mica group, montmorillonite group, vermiculite, chlorite group, palygorskite, kaolinite, nacrite, dickite and halloysite. Specific examples of the ion-exchange layered compounds include crystalline acid salts of polyvalent metals, such as $\alpha$-$Zr(HAsO_4)_2 \cdot H_2O$, $\alpha$-Zr $(HPO_4)_2$, $\alpha$-$Zr(KPO_4)_2 \cdot 3H_2O$, $\alpha$-Ti $(HPO_4)_2$, $\alpha$-Ti $(HAsO_4)_2 \cdot H_2O$, $\alpha$-$Sn(HPO_4)_2 \cdot H_2O$, $\gamma$-$Zr(HPO_4)_2$, $\gamma$-$Ti(HPO_4)_2$ and $\gamma$-$Ti(NH_4PO_4)_2 \cdot H_2O$.

The clays, the clay minerals and the ion-exchange layered compounds preferably have pore volumes, as measured on pores having a radius of not less than 20 Å by a mercury penetration method, of 0.1 cc/g or more, particularly from 0.3 to 5 cc/g. The pore volume is measured on the pores having a radius of 20 to 30000 Å by a mercury penetration method using a mercury porosimeter.

When the carrier used has a pore volume of less than 0.1 cc/g as measured on pores of 20 Å or more radius, it is often difficult to obtain high polymerization activity.

It is preferable that the clays and the clay minerals are chemically treated. Any chemical treatment may be used herein, for example a surface treatment to remove impurities attached to the surface or a treatment to affect the crystal structure of the clay. Specific examples of such chemical treatments include acid treatment, alkali treatment, salt treatment and organic matter treatment. The acid treatment contributes to not only removal of impurities from the surface but also increase of the surface area by eluting cations such as of Al, Fe and Mg from the crystal structure.

The alkali treatment destroys the crystal structure of the clay to bring about change in clay structure. The salt treatment and the organic matter treatment can produce an ionic complex, a molecular complex or an organic derivative to cause change in surface area or interlayer distance.

The ion-exchange layered compound may be enlarged in interlayer distance by changing the exchangeable ions between layers with other larger and bulkier ions by means of ion exchange properties. The bulky ions play a pillar-like roll to support the layer structure and are called "pillars". Introduction of other substances between layers of a layered compound is called "intercalation". Examples of the guest compounds to be intercalated include cationic inorganic compounds such as $TiCl_4$ and $ZrCl_4$; metallic alkoxides such as Ti (OR) $_4$, $Zr(OR)_4$, $PO(OR)_3$ and $B(OR)_3$ (wherein R is a hydrocarbon group or the like); and metallic hydroxide ions such as $[Al_{13}O_4(OH)_{24}]^{7+}$, $[Zr_4(OH)_{14}]^{2+}$ and $[Fe_3O(OCOCH_3)_6]^+$. These compounds may be used singly or in combination of two or more kinds. Intercalation of these compounds can be carried out in the presence of polymers obtained by hydrolysis of metallic alkoxides such as $Si(OR)_4$, $Al(OR)_3$ and $Ge(OR)_4$ (wherein R is a hydrocarbon group or the like) or in the presence of colloidal inorganic compounds such as $SiO_2$. Examples of the pillars include oxides resulting from thermal dehydration of the above-mentioned metallic hydroxide ions intercalated between layers.

The clays, the clay minerals and the ion-exchange layered compounds mentioned above may be used as they are or after treated by, for example, ball milling or sieving. Moreover, they may be used after subjected to water adsorption or thermal dehydration. The clays, the clay minerals and the ion-exchange layered compounds may be used singly or in combination of two or more kinds.

Of the above-mentioned compounds, the clays and the clay minerals are preferred, and montmorillonite, vermiculite, pectolite, tenorite and synthetic mica are particularly preferable.

The organic compound is, for example, a granular or fine particulate solid ranging in particle diameter from 10 to 300 μm. Specific examples thereof include (co)polymers mainly composed of an α-olefin of 2 to 14 carbon atoms such as ethylene, propylene, 1-butene or 4-methyl-1-pentene, (co)polymers mainly composed of vinylcyclohexane or styrene, and modified products thereof.

In carrying out polymerization, the usage and order of addition of the components may be selected arbitrarily. Some exemplary processes are given below:

(1) The component (A) alone is added to a polymerizer.
(2) The component (A) and the component (B) are added to a polymerizer in an arbitrary order.
(3) A catalyst component in which the component (A) is supported on the carrier (C), and the component (B) are added to a polymerizer in an arbitrary order.
(4) A catalyst component in which the component (B) is supported on the carrier (C), and the component (A) are added to a polymerizer in an arbitrary order.
(5) A catalyst component in which the components (A) and (B) are supported on the carrier (C) is added to a polymerizer.

In the processes (2) to (5), at least two of the catalyst components may be beforehand contacted with each other.

In the processes (4) and (5) in which the component (B) is supported on the carrier, other unsupported component (B) may be according to necessity added at an arbitrary stage. In this case, these components (B) may be the same or different.

The solid catalyst component wherein the component (A) alone or the components (A) and (B) are supported on the carrier (C) may be prepolymerized with an olefin. Also, an additional catalyst component may be supported on the pre-polymerized solid catalyst component.

In the olefin polymerization processes according to the invention, the olefin is polymerized or copolymerized in the presence of the above-described olefin polymerization catalyst to give an olefin polymer. The catalyst containing the preferred transition metal compound (I) may be used in ethylene/α-olefin/non-conjugated polyene copolymerization carried out under conditions other than those in the first to fifth copolymerization processes.

The sixth process for producing an ethylene/α-olefin/non-conjugated polyene copolymer of the present invention may be carried out by any of liquid-phase polymerization processes such as solution polymerization and suspension polymerization, and gas-phase polymerization processes. The liquid-phase polymerization may employ an inert hydrocarbon medium, and examples thereof include aliphatic hydrocarbons such as propane, butane, pentane, hexane, heptane octane, decane, dodecane and kerosine; alicyclic hydrocarbons such as cyclopentane, cyclohexane and methylcyclopentane; aromatic hydrocarbons such as benzene, toluene and xylene; halogenated hydrocarbons such as ethylene chloride, chlorobenzene and dichloromethane; and mixtures thereof. The olefin itself may be used as the solvent.

In the first to sixth processes for producing an ethylene/α-olefin/non-conjugated polyene copolymer with use of the transition metal compound catalyst, the transition metal compound (A) constituting the catalyst is generally used

in an amount of $10^{-12}$ to $10^{-2}$ mol, and preferably $10^{-10}$ to $10^{-3}$ mol per liter of the reaction volume.

When the component (B-1) is used, the amount thereof is such that the molar ratio ((B-1)/(M)) of the component (B-1) to all the transition metal atoms (M) in the transition metal compound component, for example in the component (A) constituting the catalyst, becomes 0.01 to 100000, and preferably 0.05 to 50000. When the component (B-2) is used, the amount thereof is such that the molar ratio ((B-2)/(M)) of the aluminum atoms in the component (B-2) to all the transition metal atoms (M) in the transition metal compound component, for example in the component (A) constituting the catalyst, becomes 10 to 500000, and preferably 20 to 100000. When the component (B-3) is used, the amount thereof is such that the molar ratio ((B-3) / (M)) of the component (B-3) to all the transition metal atoms (M) in the transition metal compound component, for example in the component (A) constituting the catalyst, becomes 1 to 10, and preferably 1 to 5.

In the ethylene/α-olefin/non-conjugated polyene copolymerization with use of the transition metal compound catalyst containing the transition metal compound (1), the copolymerization temperature is the same as in the first to fifth copolymerization processes, generally ranging from -50 to 200°C, and preferably from 0 to 170°C. The polymerization pressure is generally in the range of atmospheric pressure 0.1 MPa to 10 MPa, and preferably 0.4 MPa to 5 MPa. More specifically, an appropriate range of the pressure varies depending on the temperature. For example, a pressure from 2.7 to 5 MPa is preferable when the temperature is 100°C or above. If the pressure is too low, insufficient catalytic activity is caused, whist any excessive pressure leads to increased equipment costs and electric power costs for equipment operation. The polymerization may be carried out batchwise, semi-continuously or continuously.

It is also possible to carry out the polymerization in two or more stages under different reaction conditions.

The molecular weight of the resulting olefin polymer may be controlled by adding hydrogen to the polymerization system, by altering the polymerization temperature, or by changing the amount of the component (B).

Preferred embodiments of the sixth process for producing an ethylene/α-olefin/non-conjugated polyene copolymer rubber are listed below. Preferably one or more, and optimally all of (i) to (v) are satisfied.

(i) The α-olefin has 3 to 20 carbon atoms.
(ii) The non-conjugated polyene has a norbornene skeleton.
(iii) The ethylene content is 1 to 99 mol%.
(iv) The non-conjugated polyene content is 0.1 to 50 mol%.
(v) The intrinsic viscosity ([η]) ranges from 0.02 to 10 dl/g.

An olefin polymerization catalyst comprising the transition metal compound of the following formula (II) is novel and may be also used for copolymerization of other than ethylene, α-olefin and non-conjugated polyene:

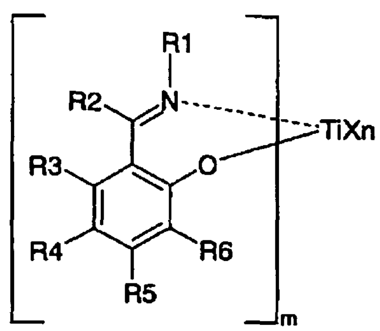

... (II)

wherein:

m is an integer of 1 to 4;
R1 to R5, which may be the same or different, are each a hydrogen atom, a halogen atom, a hydrocarbon group, a heterocyclic compound residue, an oxygen-containing group, a nitrogen-containing group, a boron-containing group, a sulfur-containing group, a phosphorus-containing group, a silicon-containing group, a germanium-containing group or a tin-containing group; R6 is a cyclic hydrocarbon group of 7 or more carbon atoms; and two or more of these substituent groups may be bonded to each other to form a ring;
when m is 2 or greater, two of the groups R1 to R6 may be bonded to each other (with the proviso that the groups R1 are not bonded to each other);
n is a number satisfying a valence of the titanium atom; and

X is a hydrogen atom, a halogen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group or a tin-containing group, and when n is 2 or greater, plural groups X may be the same or different and may be bonded to each other to form a ring.

The fifth process of ethylene/α-olefin/non-conjugated polyene copolymerization achieves high polymerization activity and provides an ethylene/α-olefin/non-conjugated polyene copolymer having high conversion of non-conjugated polyene.

Novel ethylene/α-olefin/non-conjugated polyene copolymer

A novel ethylene/α-olefin/non-conjugated polyene copolymer according to the present invention comprises ethylene, an α-olefin of 3 to 20 carbon atoms and a non-conjugated polyene, and is characterized in that:

(i) the Mooney viscosity at 100°C (ML(1+4)100°C) is 5 to 190 or the intrinsic viscosity [η] at 135°C in decalin is 0.02 to 10 dl/g;
(ii) the copolymer contains ethylene in an amount of 50 to 98.9 mol%, the α-olefin of 3 to 20 carbon atoms in an amount of 1 to 49.9 mol%, and the non-conjugated polyene in an amount of 0.1 to 49 mol% based on 100 mol% of the combined ethylene, α-olefin and non-conjugated polyene; and
(iii) the value B indicated below satisfies the following formula:

$$B \geq (1/a-1) \times 0.26+1$$

wherein $B=(c+d)/(2 \times a \times (e+f))$, in which a is an ethylene molar fraction, c is an ethylene/α-olefin dyad molar fraction, d is an ethylene/non-conjugated polyene dyad molar fraction, e is an α-olefin molar fraction, and f is a non-conjugated polyene molar fraction.

The copolymer preferably has a Mooney viscosity at 100°C (ML (1+4) 100°C) of 5 to 190 or an intrinsic viscosity [η] of 0.02 to 10 dl/g as measured in decalin at 135°C.

(ii) The copolymer contains ethylene in an amount of 50 to 98.9 mol%, preferably 50 to 89.9 mol, and more preferably 50 to 84.9 mol%, the α-olefin of 3 to 20 carbon atoms in an amount of 1 to 49.9 mol%, preferably 10 to 49.9 mol%, and more preferably 15 to 49.9 mol%, and the non-conjugated polyene in an amount of 0.1 to 49 mol%, preferably 0.1 to 15 mol%, and more preferably 0.1 to 10 mol%, based on 100 mol% of the combined ethylene, α-olefin and non-conjugated polyene.
(iii) The copolymer has a value B defined by the formula (5) that satisfies the formula (4):

$$B \geq (1/a-1) \times 0.26+1 \quad (4)$$

wherein $B=(c+d)/(2 \times a \times (e+f))$ ... (5), in which a is an ethylene molar fraction, c is an ethylene/α-olefin dyad molar fraction, d is an ethylene/non-conjugated polyene dyad molar fraction, e is an α-olefin molar fraction, and f is a non-conjugated polyene molar fraction.

When the copolymer is ethylene/propylene/5-ethylidene-2-norbornene copolymer, the copolymer preferably satisfies:

$$B \geq (1/a-1) \times 0.28+1 \quad (6);$$

and more preferably

$$B \geq (1/a-1) \times 0.30+1 \quad (7).$$

The fractions a, c, d, e and f may be determined from a $^{13}$C-NMR spectrum of the copolymer on the basis of, for example, the report by J.C. Randall (Macromolecules, 15, 353 (1982)) and J. Ray (Macromolecules, 10,773 (1977)).

In the case of the ethylene/propylene/5-ethylidene-2-norbornene (ENB) copolymer, these fractions are determined as follows.

First, the following nine NMR integration values are obtained:

<1> $\alpha\beta$, <2> $\alpha\gamma$+$\alpha\delta$, <3> $\beta\gamma$, <4> $\beta\delta$, <5> $\gamma\delta$, <6> $\delta\delta$, <7> 3E, <8> 3Z and <9> $\alpha\alpha$+1Z+5E+5Z+6E+6Z

Herein, <7> to <9> are assigned to the carbons derived from ENB, and the numbers indicate the positions in the figure given below, and the alphabetic characters, for example E and Z denote E isomer and Z isomer respectively.

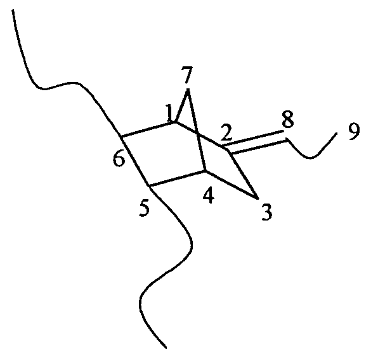

<2> is a total of the peaks near 37 to 39 ppm, <6> is a value obtained by subtracting the $\gamma\gamma$ and $\gamma\delta$ peaks from the total of the peaks near 29 to 31 ppm, and <9> is the total of the peaks neat 44 to 48 ppm.

$\alpha\alpha$ is calculated as follows:

$$\alpha\alpha = \alpha\alpha+1Z+5E+5Z+6E+6Z-2\times 3E-3\times 3Z$$

$$= \langle 9\rangle - 2\times\langle 7\rangle - 3\times\langle 8\rangle$$

The dyads are calculated as follows. NN (ENB-ENB chain) is not observed.

$$\text{PP (propylene-propylene chain)} = \alpha\alpha+\alpha\beta/4$$

$$\text{PE (propylene-ethylene chain)} = \alpha\gamma+\alpha\delta+\alpha\beta/2$$

$$\text{EE (ethylene-ethylene chain)} = (\beta\delta+\delta\delta)/2+(\gamma\delta+\beta\gamma)/4$$

$$\text{NE (ENB-ENB chain)} = (3E+3Z)\times 2$$

The composition is determined as follows:

$$\text{e (}\alpha\text{-olefin molar fraction)} =$$

$$(PP+PE/2)/(PP+PE+EE+3E+3Z)$$

$$\text{a (ethylene molar fraction)} =$$

$$(EE+PE/2)/(PP+PE+EE+3E+3Z)$$

f (non-conjugated polyene molar fraction) =

(3E+3Z)/(PP+PE+EE+3E+3Z)

The B value is calculated as follows:

B value = (PE+NE) / (PP+PE+NE+EE) / (2×a×(e+f))

When the B value is in the aforesaid range, the ethylene/α-olefin/non-conjugated polyene copolymer exhibits excellent flexibility particularly at low temperatures.

The copolymer according to the present invention provides a $^{13}$C-NMR spectrum in which the intensity ratio Tαβ/Tαα is preferably in the range of 0.015 to 0.15, more preferably 0. 02 to 0.13, and still preferably 0.03 to 0.12. The intensity Tαβ is, as illustrated below, a peak intensity in the $^{13}$C-NMR spectrum assigned to the carbon atom having branches at α and β positions. The intensity Tαα is a peak intensity assigned to the carbon atom having branches at both α positions.

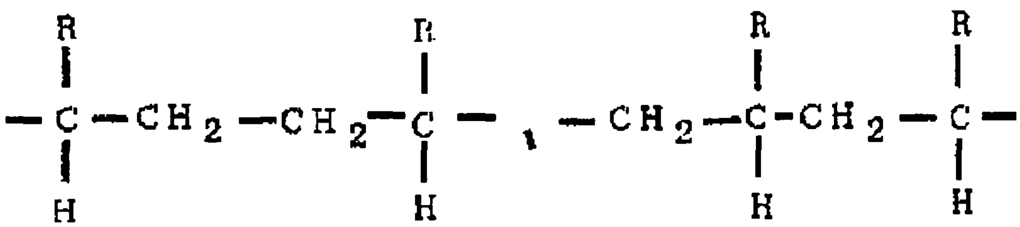

(Tαβ) (Tαα)

The intensity ratio can be determined in the following manner. A $^{13}$C-NMR spectrum of the copolymer is obtained by the use of, for example, a JEOL 400 MHz NMR measuring device. The measurement is made using a mixed solution of hexachlorobutadiene/d6-benzene (2/1 by volume) having a sample concentration of 5 wt%, under the conditions of 67.8 MHz, 25°C and d6-benzene as a standard (128 ppm). The $^{13}$C-NMR spectrum obtained is analyzed in accordance with the proposals by Lindemann Adams (Analysis Chemistry 43, p. 1245 (1971)) and J.C. Randall (Review Macromolecular Chemistry Physics, C29, 201 (1989)) to determine the intensity ratio.

When the intensity ratio is in the above range, the copolymer has superior strength.

The α-olefins of 3 to 20 carbon atoms include those described in the first to sixth copolymerization processes, and propylene, 1-butene, 1-hexene and 1-octene are particularly preferred.

The non-conjugated polyenes include those described in the first to sixth copolymerization processes, and polyenes having a norbornene skeleton, especially 5-ethylidene-2-norbornene, are particularly preferred.

In the copolymer according to the present invention, it is particularly preferred that the content of the residual transition metal is 20 ppm or less. The transition metal content may be determined by ICP emission spectrometry.

In Examples presented below, properties of the copolymer were measured in the following manner:

(1) Intrinsic viscosity [η]

The intrinsic viscosity was measured in decalin at 135°C.

(2) Mooney viscosity ML(1+4)

The Mooney viscosity was determined at 100°C in accordance with ASTM 1646.

(2) Unreacted residual non-conjugated polyene content in copolymer

The polymer was dissolved in decalin, and the residual non-conjugated polyene content was quantitated by internal standard gas chromatography.

(3) Residual transition metal content in copolymer

The residual transition metal was quantitated by ICP emission spectrometry.

(4) Glass transition temperature

The glass transition temperature was determined by DSC using DSC 5200H produced by SEIKO. About 10 mg of a sample was loaded into an aluminum pan, and the temperature was raised to 200°C at a rate of 50°C/min. The temperature was maintained at 200°C for 5 minutes, then lowered to -100°C at a rate of 10°C/min, and raised at a rate of 10°C/min to obtain an endothermic curve. The temperature at which the endothermic curve started to incline to the endothermic side was determined, and the linear curves behind and ahead the temperature point were calibrated to intersect to each other. The glass transition temperature was determined from the intersection point of the tangent lines.

## EFFECT OF THE INVENTION

The processes for producing an ethylene/α-olefin/non-conjugated polyene copolymer according to the present invention enable simple production of a copolymer having a low concentration of residual non-conjugated polyene and minor problems such as low-level color development.

The ethylene/α-olefin/non-conjugated polyene copolymer of the invention has excellent low-temperature flexibility.

## EXAMPLES

The present invention will be hereinafter described in greater detail by the following Examples, but it should be construed that the invention is in no way limited to those

Examples.

[Example 1]

A 1.5-L stainless steel (SUS) autoclave thoroughly purged with nitrogen was charged with 675 ml of hexane containing 1.65 ml of purified 5-ethylidene-2-norbornene (hereinafter ENB) at a temperature of 23°C. The SUS autoclave was then heated to 353.16 K (80°C). Thereafter, propylene was introduced to a pressure of 0.63 MPaG, and subsequently ethylene was charged to achieve a total pressure of 0.8 MPaG. Next, 0.357 ml (0.75 mmol in terms of Al) of a MAO/toluene solution containing 2.1 mmol/ml of aluminum was pressed into the autoclave. Thereafter, 1.5 ml of a toluene solution containing 0.001 mmol/ml of a compound (1) (synthesized by the method described above) was pressed into the autoclave:

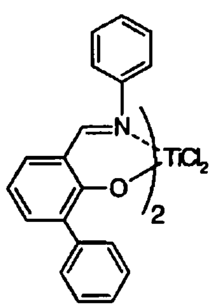

Compound (1)

Polymerization was performed for 30 minutes after the compound (1) had been pressed. The pressure was maintained unchanged from that immediately after the pressing, by pressurizing the autoclave with ethylene.

After the lapse of a predetermined time, 0.5 ml of methanol was pressed into the autoclave with nitrogen to terminate the polymerization. The polymerization solution obtained was transferred to a tray, and the hexane was removed at 23°C and -10 mmHg. The resultant product was dried at 130°C and -600 mmHg for 8 hours to give 15 g of an ethylene/propylene/ENB copolymer having an ethylene content of 69 mol%, an ENB conversion of 98%, an

intrinsic viscosity [η] of 1.0 dl/g, and an iodine value of 20 g/100g. The polymerization activity was 20 kg/mmol-Ti per hour, and the polymer obtained was colorless. The residual contents of the transition metal and the non-conjugated polyene were 5 ppm and 150 ppm respectively. The polymer's glass transition temperature (Tg) was -44°C and B value was 1.139. The right-hand side of the formula (4), namely, $(1/a-1)\times 0.26+1$, was 1.117, satisfying the inequality (4).

The $^{13}$C-NMR intensity ratio $T\alpha\beta/T\alpha\alpha$ was 0.052. The transition metal compound catalyst used herein had a $C_{2-4}$ α-olefin partial pressure of 0.66 MPa as measured at 80°C, satisfying the requirement of 0.6 MPa or above. These results provide an average ENB concentration C in the polymerization solution of 8.31 mmol/L or 0.008 mol/L, satisfying the requirement of 15 mmol/L or below. The ethylene content of 69 mol% in the copolymer was close to the required 70 mol%, and the iodine value was over 15.

In the above polymerization, $P_a$ (polymerization pressure) was maintained constant at 0.8 MPaG (0.9 MPa) from initiation to completion of the polymerization. Further, $P_b$ (combined vapor pressure of the hydrocarbon solvent and the monomers) was 0.8 MPa because the polymerization pressure was 0.8 MPaG (0.9 MPa) and the organic compound molar fraction was 0.888. The Cmax was calculated employing the formulae (1-2) and (3-2) for the polymerization temperature of 80°C. The formula (1-2) gave Cmax of 0.031 mol/L and the formula (3-2) provided Cmax of 0.027 mol/L. Thus, the concentration C was confirmed to be less than the Cmax conditions.

[Example 2]

A 1.5-L stainless steel (SUS) autoclave thoroughly purged with nitrogen was charged with 675 ml of hexane containing 0.91 ml of purified ENB at a temperature of 23°C. The SUS autoclave was then heated to 353.16 K (80°C). Thereafter, propylene was introduced to a pressure of 0. 63 MPaG, and subsequently ethylene was charged to achieve a total pressure of 0.8 MPaG. Next, 0.357 ml (0.75 mmol in terms of Al) of a MAO/toluene solution containing 2.1 mmol/ml of aluminum was pressed into the autoclave. Thereafter, 1.5 ml of a toluene solution containing 0.001 mmol/ml of the compound

(1) was pressed into the autoclave.

Polymerization was performed for 25 minutes after the compound (1) had been pressed. The pressure was maintained unchanged from that immediately after the pressing, by pressurizing the autoclave with ethylene.

After the lapse of a predetermined time, 0.5 ml of methanol was pressed into the autoclave with nitrogen to terminate the polymerization. The polymerization solution obtained was transferred to a tray, and the hexane was removed at 23°C and -10 mmHg. The resultant product was dried at 130°C and -600 mmHg for 8 hours to give 17 g of an ethylene/propylene/ENB copolymer having an ethylene content of 69 mol%, an ENB conversion of 99%, an intrinsic viscosity [η] of 1.1 dl/g, and an iodine value of 10 g/100g. The polymerization activity was 27 kg/mmol-Ti per hour, and the polymer obtained was colorless. These results provide an average ENB concentration C in the polymerization solution of 0.004 mol/L (4.03 mmol/L).

In the above polymerization, $P_a$ (polymerization pressure) was maintained constant at 0.8 MPaG (0.9 MPa) from initiation to completion of the polymerization. Further, $P_b$ (combined vapor pressure of the hydrocarbon solvent and the monomers) was 0.8 MPa because the polymerization pressure was 0.8 MPaG (0.9 MPa) and the organic compound molar fraction was 0.888. The Cmax was calculated employing the formulae (1-2) and (3-2) for the polymerization temperature of 80°C. The formula (1-2) gave Cmax of 0.016 mol/L and the formula (3-2) provided Cmax of 0.014 mol/L. Thus, the concentration C was confirmed to be less than the Cmax conditions.

[Example 3]

A 2.0-L stainless steel (SUS) autoclave thoroughly purged with nitrogen was charged with 800 ml of hexane containing 5.2 ml of purified 5-ethylidene-2-norbornene (hereinafter ENB) at a temperature of 23°C. The SUS autoclave was further charged with 150 g of propylene and thereafter sealed. The SUS autoclave was then heated to 378.16 K (105°C), and the pressure gauge indicated 2.2 MPaG. Thereafter, ethylene was introduced to achieve a total pressure of 2.9 MPaG. Next, 0.952 ml (2.0 mmol in terms of Al) of a MAO/toluene solution containing 2.1 mmol/ml of aluminum was pressed into the autoclave. Thereafter, 4.0 ml of a toluene solution containing 0.001 mmol/ml of the compound (1) was pressed into the autoclave.

Polymerization was performed for 30 minutes after the compound (1) had been pressed. The pressure was maintained unchanged from that immediately after the pressing, by pressurizing the autoclave with ethylene. After the lapse of a predetermined time, 0.5 ml of methanol was pressed into the autoclave with nitrogen to terminate the polymerization. The polymerization solution obtained was transferred to a tray, and the hexane was removed at 23°C and -10 mmHg. The resultant product was dried at 130°C and -600 mmHg for 8 hours to give 18 g of an ethylene/propylene/ENB copolymer having an ethylene content of 69 mol%, an ENB conversion of 98%, an intrinsic viscosity

[η] of 0.8 dl/g, and an iodine value of 20 g/100g. The polymerization activity was 9 kg/mmol-Ti per hour, and the polymer obtained was colorless. The residual transition metal content was 10 ppm. These results provide an average ENB concentration C in the polymerization solution of 0.031 mol/L (31.1 mmol/L). In the above polymerization, $P_a$ (polymerization pressure) was maintained constant at 2.9 MPaG (3.0 MPa) from initiation to completion of the polymerization. Further, $P_b$ (combined vapor pressure of the hydrocarbon solvent and the monomers) was 2.9 MPa because the polymerization pressure was 2.9 MPaG (3.0 MPa) and the organic compound molar fraction was 0.966. The Cmax was calculated employing the formulae (1-2) and (3-2) for the polymerization temperature of 105°C. The formula (1-2) gave Cmax of 0.097 mol/L and the formula (3-2) provided Cmax of 0.093 mol/L. Thus, the concentration C was confirmed to be less than the Cmax conditions.

[Comparative Example 1]

A 1.5-L stainless steel (SUS) autoclave thoroughly purged with nitrogen was charged with 675 ml of hexane containing 12 ml of purified ENB at a temperature of 23°C. The SUS autoclave was then heated to 80°C. When the temperature reached 353.16 K (80°C), propylene was introduced to a pressure of 0.3 MPa, and subsequently ethylene was charged to achieve a total pressure of 0.8 MPa. Next, 0.15 mmol of triisobutylaluminum was pressed into the autoclave. Subsequently, 0.75 ml of a hexane solution containing 0.001 mmol/ml of (t-butylamido)dimethyl (tetramethyl-η5-cyclopentadienyl)silanetitanium dichloride, and 1.25 ml of a toluene solution containing 0.003 mmol/ml of triphenylcarbeniumtetrakis(pentafluorophenyl) borate were separately pressed into the autoclave.

Polymerization was performed for 15 minutes after the triphenylcarbeniumtetrakis(pentafluorophenyl) borate had been pressed. The pressure was maintained unchanged from that immediately after the pressing, by pressurizing the autoclave with ethylene. After the lapse of a predetermined time, 3 ml of methanol was pressed into the autoclave with nitrogen to terminate the polymerization. The polymerization solution obtained was transferred to a tray, and the hexane was removed at 23°C and -10 mmHg. The resultant product was dried at 130°C and -600 mmHg for 8 hours to give 41 g of an ethylene/propylene/ENB copolymer having an ethylene content of 68 mol%, an ENB conversion of 30%, an intrinsic viscosity [η] of 3.1 dl/g, and an iodine value of 20 g/100g. The polymerization activity was 219 kg/mmol-Zr per hour, and the polymer obtained was colorless. The polymer's glass transition temperature (Tg) was -38°C and B value was 0.97. The right-hand side of the formula (4), namely, (1/a-1) ×0.26+1, was 1.122, failing to satisfy the inequality (4).

The $^{13}$C-NMR intensity ratio Tαβ/Tαα was 0.14.

The transition metal compound catalyst used herein had a $C_{2-4}$ α-olefin partial pressure of 0.66 MPa as measured at 80°C, satisfying the requirement of 0.6 MPa or above. These results provide an average ENB concentration C in the polymerization solution of 0.107 mol/L (107 mmol/L), exceeding the requirement of 15 mmol/L. The ethylene content of 68 mol% in the copolymer was close to the required 70 mol%, and the iodine value was over 15. In this embodiment, the iodine value IV was only 20 in spite of the high concentration C. When polymerization had been carried out such that the concentration C became 15 mmol/L, the iodine value IV would have been lower than 15.

In the above polymerization, $P_a$ (polymerization pressure) was maintained constant at 0.8 MPaG (0.9 MPa) from initiation to completion of the polymerization. Further, $P_b$ (combined vapor pressure of the hydrocarbon solvent and the monomers) was 0.8 MPa because the polymerization pressure was 0.8 MPaG (0. 9 MPa) and the organic compound molar fraction was 0.888. The Cmax was calculated employing the formulae (1-2) and (3-2) for the polymerization temperature of 80°C. The formula (1-2) gave Cmax of 0.031 mol/L and the formula (3-2) provided Cmax of 0.027 mol/L. Thus, the concentration C was confirmed to be higher than the Cmax conditions.

[Comparative Example 2]

A 1.5-L stainless steel (SUS) autoclave thoroughly purged with nitrogen was charged with 675 ml of hexane containing 1.2 ml of purified ENB at a temperature of 23°C. The SUS autoclave was then heated to 40°C. When the temperature reached 40°C, 250 Nml of hydrogen was added. Thereafter, propylene was introduced to a pressure of 0.54 MPa, and subsequently ethylene was charged to achieve a total pressure of 0.8 MPa.

Next, 0.5 mmol of ethylaluminumsesquichloride, and subsequently 5 ml (0.05 mmol) of a hexane solution containing 0.01 mmol/ml of dichloroethoxyvanadium oxide were pressed into the autoclave.

Polymerization was performed for 10 minutes after the hexane solution of dichloroethoxyvanadium oxide had been pressed. After the lapse of a predetermined time, 3 ml of methanol was pressed into the autoclave with nitrogen to terminate the polymerization. The polymerization solution obtained was transferred to a tray, and the hexane was removed at 23°C and -10 mmHg. The resultant product was dried at 130°C and -600 mmHg for 8 hours to give 9 g of an ethylene/propylene/ENB copolymer having an ethylene content of 70 mol%, an ENB conversion of 85%, an intrinsic viscosity [η] of 3.0 dl/g, and an iodine value of 21 g/100g. The polymerization activity was 1.08 kg/mmol-Zr per hour, and the polymer obtained was brown and commercially unviable. The residual transition metal content was not less

than 150 ppm. The polymer' s glass transition temperature (Tg) was -43°C and B value was 1.105. The right-hand side of the formula (4), namely, $(1/a-1)\times 0.26+1$, was 1.111, failing to satisfy the inequality (4).

The $^{13}$C-NMR intensity ratio $T\alpha\beta/T\alpha\alpha$ was 1.42.

These results provide an average ENB concentration C in the polymerization solution of 0.007 mol/L (7.05 mmol/L). In the above polymerization, $P_a$ (polymerization pressure) was maintained constant at 0.8 MPaG (0.9 MPa) from initiation to completion of the polymerization. Further, $P_b$ (combined vapor pressure of the hydrocarbon solvent and the monomers) was 0.8 MPa because the polymerization pressure was 0.8 MPaG (0.9 MPa) and the organic compound molar fraction was 0.888. The Cmax was calculated employing the formulae (1-1) and (3-1) for the polymerization temperature of 313.16 K (40°C). The formula (1-1) gave Cmax of 0.062 mol/L and the formula (3-1) provided Cmax of 0.054 mol/L. Thus, the concentration C was confirmed to be less than the Cmax conditions.

## Claims

1. A process for producing an ethylene/α-olefin/non-conjugated polyene copolymer comprising copolymerizing ethylene, an α-olefin and a non-conjugated polyene in a hydrocarbon solvent with use of a transition metal compound catalyst, and removing the unreacted monomers and the hydrocarbon solvent from the copolymer solution without removing the catalyst residue, wherein the copolymerization is carried out at a polymerization temperature of 100°C or above and a polymerization pressure of 2.7 MPa or above in a manner such that the non-conjugated polyene concentration in the polymerization solution is less than the maximum non-conjugated polyene concentration Cmax (mol/L) indicated below:

   Cmax = 0.050 (mol/L) when the copolymer has an iodine value (IV) of 9.0 g/100 g to less than 17.0 g/100 g; or
   Cmax = 0.104 (mol/L) when the copolymer has an iodine value (IV) of 17.0 g/100 g or above.

2. A process for producing an ethylene/α-olefin/non-conjugated polyene copolymer comprising copolymerizing ethylene, an α-olefin and a non-conjugated polyene in a hydrocarbon solvent with use of a transition metal compound catalyst, and removing the unreacted monomers and the hydrocarbon solvent from the copolymer solution without removing the catalyst residue, wherein the copolymerization is carried out at a polymerization temperature of 100°C or above and a combined vapor pressure of the hydrocarbon solvent and the unreacted monomers of 2.7 MPa or above in a manner such that the non-conjugated polyene concentration in the polymerization solution is less than the maximum non-conjugated polyene concentration Cmax (mol/L) indicated below:

   Cmax = 0.050 (mol/L) when the copolymer has an iodine value (IV) of 9.0 g/100 g to less than 17.0 g/100 g; or
   Cmax = 0.104 (mol/L) when the copolymer has an iodine value (IV) of 17.0 g/100 g or above.

3. A process for producing an ethylene/α-olefin/non-conjugated polyene copolymer comprising copolymerizing ethylene, an α-olefin and a non-conjugated polyene in a hydrocarbon solvent with use of a transition metal compound catalyst, and removing the unreacted monomers and the hydrocarbon solvent from the copolymer solution without removing the catalyst residue, wherein the copolymerization is carried out at a polymerization temperature T (K) and a polymerization pressure $P_a$ (MPa) in a manner such that the non-conjugated polyene concentration in the polymerization solution is less than the maximum non-conjugated polyene concentration Cmax (mol/L) indicated below:

$$\mathrm{Cmax} = 0.050 \times \text{Iodine Value (IV)} \times 10^{\{12.25+1.16\times \log P^{a}+5.37\times \log(1/T)\}}$$

   when the polymerization temperature is less than 353.16 K (80°C);

$$\mathrm{Cmax} = 0.050 \times \text{Iodine Value (IV)} \times 10^{\{11.88+1.23\times \log P^{a}+5.23\times \log(1/T)\}}$$

   when the polymerization temperature is from 353.16 K (80°C) to less than 393.16 K (120°C); or

$$Cmax = 0.050 \times \text{Iodine Value (IV)} \times 10^{\{19.02+1.61\times \log P^{a}+8.02\times \log(1/T)\}}$$

when the polymerization temperature is 393.16 K (120°C) or above.

**4.** A process for producing an ethylene/α-olefin/non-conjugated polyene copolymer comprising copolymerizing ethylene, an α-olefin and a non-conjugated polyene in a hydrocarbon solvent with use of a transition metal compound catalyst, and removing the unreacted monomers and the hydrocarbon solvent from the copolymer solution without removing the catalyst residue, wherein the copolymerization is carried out at a polymerization temperature T (K) and a combined vapor pressure $P_b$ (MPa) of the hydrocarbon solvent and the monomers in a manner such that the non-conjugated polyene concentration in the polymerization solution is less than the maximum non-conjugated polyene concentration Cmax (mol/L) indicated below:

$$Cmax = 0.050 \times \text{Iodine Value (IV)} \times 10^{\{12.25+1.16\times \log P^{b}+5.37\times \log(1/T)\}}$$

when the polymerization temperature is less than 353.16 K (80°C);

$$Cmax = 0.050 \times \text{Iodine Value (IV)} \times 10^{\{11.88+1.23\times \log P^{b}+5.23\times \log(1/T)\}}$$

when the polymerization temperature is from 353.16 K (80°C) to less than 393.16 K (120°C); or

$$Cmax = 0.050 \times \text{Iodine Value (IV)} \times 10^{\{19.02+1.61\times \log P^{b}+8.02\times \log(1/T)\}}$$

when the polymerization temperature is 393.16 K (120°C) or above.

**5.** A process for producing a copolymer comprising copolymerizing ethylene, an α-olefin and a non-conjugated polyene in a hydrocarbon solvent, and obtaining a copolymer without removing the catalyst residue from the polymerization solution, wherein the copolymerization is carried out under conditions satisfying the formula (1):

$$\frac{\text{Ethylene concentration in polymerization solution (wt\%)} \times \text{Non-conjugated polyene concentration in polymer (wt\%)}}{\text{Non-conjugated polyene concentration in polymerization solution (wt\%)}} \geq 20 \quad (1)$$

**6.** The process for producing an ethylene/α-olefin/non-conjugated polyene copolymer according to claim 5, wherein the copolymerization is carried out with use of a transition metal compound catalyst in a manner such that the unreacted monomers and the hydrocarbon solvent are removed from the polymerization solution whilst the catalyst residue is not removed.

**7.** The process for producing an ethylene/α-olefin/non-conjugated polyene copolymer according to any one of claims 1 to 6, wherein the removal of the unreacted monomers and the hydrocarbon solvent is performed by evaporation.

**8.** The process for producing an ethylene/α-olefin/non-conjugated polyene copolymer according to any one of claims 1 to 7, wherein the content of residual unreacted polyene in the copolymer is not more than 500 ppm.

**9.** A process for producing an ethylene/propylene/non-conjugated polyene copolymer according to any one of claims 1 to 8, wherein the transition metal compound catalyst is capable of catalyzing copolymerization of ethylene, propylene and a non-conjugated polyene to give an ethylene/propylene/non-conjugated polyene copolymer having an ethylene content of 70 mol% and an iodine value of at least 15, when the copolymerization is carried out under conditions such that the polymerization temperature is 80°C, a reactor is employed which includes a gas phase and a liquid phase, the ethylene and propylene of the gas phase have a combined partial pressure of 0.6 MPa or above, and the non-conjugated polyene of the liquid phase has a concentration of 15 mmol/L or below.

**10.** The process for producing an ethylene/α-olefin/non-conjugated polyene copolymer according to any one of claims 1 to 9, wherein the transition metal content in the copolymer is not more than 20 ppm.

**11.** The process for producing an ethylene/α-olefin/non-conjugated polyene copolymer, wherein the transition metal compound catalyst is a transition metal-containing polymerization catalyst comprising:

(A) a transition metal compound represented by the following formula (I); and
(B) at least one compound selected from (B-1) to (B-3):

(B-1) an organometallic compound;
(B-2) an organoaluminum oxy-compound; and
(B-3) a compound which reacts with the transition metal compound (A) to form an ion pair:

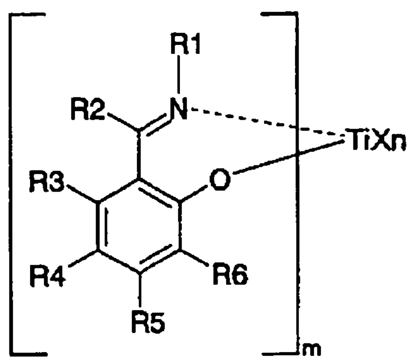

··· (I)

wherein:

m is an integer of 1 to 4;
R1 to R5, which may be the same or different, are each a hydrogen atom, a halogen atom, a hydrocarbon group, a heterocyclic compound residue, an oxygen-containing group, a nitrogen-containing group, a boron-containing group, a sulfur-containing group, a phosphorus-containing group, a silicon-containing group, a germanium-containing group or a tin-containing group; R6 is a group selected from aliphatic hydrocarbon groups in which the carbon bonded to the phenyl group is a primary, secondary or tertiary carbon, alicyclic hydrocarbon groups in which the carbon bonded to the phenyl group is a primary, secondary or tertiary carbon, and aromatic groups; and two or more of these substituent groups may be bonded to each other to form a ring;
when m is 2 or greater, two of the groups R1 to R6 may be bonded to each other (with the proviso that the groups R1 are not bonded to each other);
n is a number satisfying a valence of the titanium atom; and
X is a hydrogen atom, a halogen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group or a tin-containing group, and when n is 2 or greater, plural groups X may be the same or different and may be bonded to each other to form a ring.

**12.** An ethylene/α-olefin/non-conjugated polyene copolymer comprising ethylene, an α-olefin of 3 to 20 carbon atoms and a non-conjugated polyene, the copolymer being
**characterized in that**:

(i) the Mooney viscosity at 100°C (ML(1+4)100°C) is 5 to 190 or the intrinsic viscosity [η] at 135°C in decalin

is 0.02 to 10 dl/g;
(ii) the copolymer contains ethylene in an amount of 50 to 98.9 mol%, the α-olefin of 3 to 20 carbon atoms in an amount of 1 to 49.9 mol%, and the non-conjugated polyene in an amount of 0.1 to 49 mol% based on 100 mol% of the combined ethylene, α-olefin and non-conjugated polyene; and
(iii) the value B indicated below satisfies the formula (2) :

$$B \geq (1/a-1) \times 0.26+1 \qquad (2)$$

wherein B= (c+d) / (2×a× (e+f)), in which a is an ethylene molar fraction, c is an ethylene/α-olefin dyad molar fraction, d is an ethylene/non-conjugated polyene dyad molar fraction, e is an α-olefin molar fraction, and f is a non-conjugated polyene molar fraction.

**13.** The ethylene/α-olefin/non-conjugated polyene copolymer according to claim 12, wherein the non-conjugated polyene has a norbornene skeleton.

**14.** The ethylene/α-olefin/non-conjugated polyene copolymer according to claim 12 or 13, which provides a $^{13}$C-NMR spectrum in which the intensity ratio Tαβ/Tαα is 0.015 to 0.15.

**15.** The ethylene/α-olefin/non-conjugated polyene copolymer according to any one of claims 12 to 14, wherein the transition metal content in the copolymer is 20 ppm or less.

# INTERNATIONAL SEARCH REPORT

International application No.
PCT/JP2004/000586

A. CLASSIFICATION OF SUBJECT MATTER
Int.Cl[7] C08F210/18, C08F4/64

According to International Patent Classification (IPC) or to both national classification and IPC

B. FIELDS SEARCHED

Minimum documentation searched (classification system followed by classification symbols)
Int.Cl[7] C08F210/00-210/18, C08F4/60-4/70

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 63-8408 A (Mitsui Petrochemical Industries, Ltd.), 14 January, 1988 (14.01.88), Claims; examples (Family: none) | 1-4,7-9 |
| X | JP 2-142807 A (Idemitsu Petrochemical Co., Ltd.), 31 May, 1990 (31.05.90), Claims; examples (Family: none) | 1-4 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 April, 2004 (06.04.04) | 20 April, 2004 (20.04.04) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP2004/000586

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-512600 A (Exxon Chemical Patents Inc.), 02 December, 1998 (02.12.98), Claims; table I & WO 96/12744 A1 & EP 788521 A1 & CN 1161700 A & US 6300451 B1 & DE 69506906 C2 & TW 422857 B & CA 2202402 A | 1-4 |
| X | WO 00/59962 A1 (Mitsui Chemicals, Inc.), 12 October, 2000 (12.10.00), Claims; examples & CN 1310730 A & EP 1088836 A1 & KR 2001043825 A & US 6410650 B1 | 5-10,12,13, 15 |
| X | JP 9-71617 A (Mitsui Petrochemical Industries, Ltd.), 18 March, 1997 (18.03.97), Examples & CA 2165644 A & CN 1130639 A & EP 718325 A2 & KR 190428 B1 & TW 383313 A & US 5696214 A | 5-10,12,13, 15 |
| X | JP 5-262827 A (Mitsui Petrochemical Industries, Ltd.), 12 October, 1993 (12.10.93), Examples & CA 2087916 A & EP 552945 A2 & KR 230660 B1 & US 5599885 A | 5-10,12,15 |
| X | JP 11-315109 A (Mitsui Chemicals, Inc.), 16 November, 1999 (16.11.99), Claims; Par. Nos. [122] to [0152], [0284] to [0285] & CA 2235905 A & CN 1199052 A & EP 874005 A1 & TW 420693 A & KR 98081756 A & US 2002/055600 A1 | 11 |

Form PCT/ISA/210 (continuation of second sheet) (July 1998)

**INTERNATIONAL SEARCH REPORT**

International application No.
PCT/JP2004/000586

**Box I Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:

(See extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.
☒ No protest accompanied the payment of additional search fees.

Form PCT/ISA/210 (continuation of first sheet (1)) (July 1998)

**INTERNATIONAL SEARCH REPORT**

International application No.
PCT/JP2004/000586

Continuation of Box No. II of continuation of first sheet(1)

This application involves the following four groups of inventions.

1. Claims 1-4 and 7-10
They relate to a process for producing an ethylene/α-olefin/unconjugated polyene copolymer at a specific temperature and pressure, wherein the unconjugated-polyene concentration in the polymerization mixture solution is regulated to a specific value or less.

2. Claims 5 and 6
They relate to a process in which ethylene, an α-olefin, and an unconjugated polyene are copolymerized under such conditions that the ethylene concentration in the polymerization mixture solution, the unconjugated-polyene concentration in the polymer, and the unconjugated-polyene concentration in the polymerization mixture solution satisfy a specific relationship.

3. Claim 11
It relates to a process for producing an ethylene/α-olefin/unconjugated polyene copolymer with the aid of a specific catalyst.

4. Claims 12-15
They relate to an ethylene/α-olefin/unconjugated polyene copolymer satisfying specific material properties.

These four groups of inventions are not considered to be a group of inventions so linked as to form a single general inventive concept.

Form PCT/ISA/210 (extra sheet) (July 1998)